(19) Europäisches Patentamt

European Patent Office

Office européen des brevets

(11) EP 0 612 982 B2

(12) NOUVEAU FASCICULE DE BREVET EUROPEEN

(45) Date de publication et mention de la décision concernant l'opposition:
**12.07.2000 Bulletin 2000/28**

(45) Mention de la délivrance du brevet:
**02.04.1997 Bulletin 1997/14**

(21) Numéro de dépôt: **94400228.6**

(22) Date de dépôt: **03.02.1994**

(51) Int. Cl.7: **G01D 3/02**, G01D 1/02

(54) **Circuit de traitement pour signal de sortie de capteur analogique résistif, notamment pour jauge de carburant**

Messschaltung für Widerstandssensor, insbesondere Krafstoffmesser

Conditioning circuit for analogue resistance sensor, especially for fuel gauge

(84) Etats contractants désignés:
**DE ES FR GB IT SE**

(30) Priorité: **26.02.1993 FR 9302217**

(43) Date de publication de la demande:
**31.08.1994 Bulletin 1994/35**

(73) Titulaires:
• **MARWAL SYSTEMS**
**51000 Chalons sur Marne (FR)**
• **MAGNETI MARELLI FRANCE**
**F-92000 Nanterre (FR)**

(72) Inventeurs:
• **Chapotot, Michel**
**F-95150 Taverny (FR)**
• **Marteau, Bernard**
**F-91430 Igny (FR)**
• **Poletto, Vanni**
**I-15033 Casale Monferrato, AL (IT)**
• **Poma, Alberto**
**I-27100 Pavia, PV (IT)**
• **Philippon, Xavier**
**F-78180 Montigny-le-Bretonneux (FR)**

(74) Mandataire: **Martin, Jean-Jacques**
**Cabinet REGIMBEAU**
**26, Avenue Kléber**
**75116 Paris (FR)**

(56) Documents cités:
DE-A- 3 631 285          FR-A- 2 595 818
US-A- 4 866 435

EP 0 612 982 B2

## Description

La présente invention concerne le domaine des systèmes comprenant un capteur analogique résistif dont le signal de sortie est appliqué à une charge à commande électrique, par exemple un dispositif indicateur.

La présente invention s'applique notamment, mais non exclusivement, au domaine des dispositifs indicateurs pour véhicules automobiles.

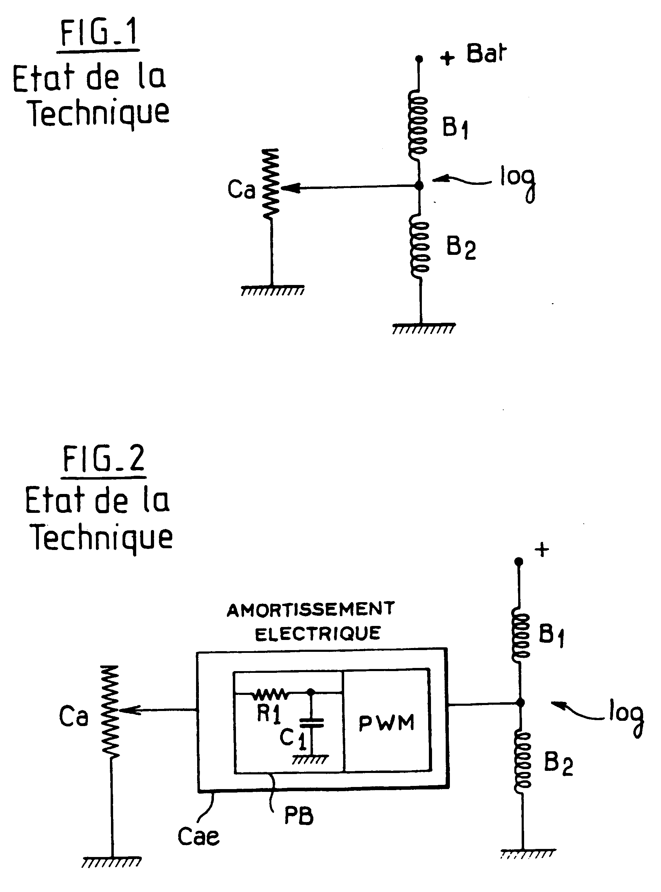

Plus précisément, la présente invention concerne tout particulièrement, mais non exclusivement, les chaînes de mesure du type représenté sur la figure 1 comprenant un capteur résistif Ca dont la résistance de sortie est fonction d'une grandeur physique détectée, et un indicateur Log, par exemple de type logométrique, relié à la sortie du capteur Ca.

Le capteur Ca de type résistif, par exemple de type rhéostatique, peut présenter une résistance de sortie dépendant par exemple d'un niveau de liquide, tel qu'un niveau de carburant.

De façon connue en soi, les indicateurs Log de type logométrique comprennent généralement au moins deux bobines croisées géométriquement B1, B2. Les bobines B1, B2 sont reliées électriquement en série, généralement entre une borne de masse et une borne d'alimentation positive +Bat. Le point commun aux deux bobines B1, B2 est relié à la sortie du capteur Ca.

Un aimant bipolaire solidaire d'une aiguille est monté à rotation dans le champ des deux bobines B1, B2. Ainsi, l'aimant et l'aiguille indicatrice du logomètre se déplacent selon le rapport des courants dans les deux bobines B1 et B2 et tendent à s'aligner dans la direction du champ magnétique résultant de la composition des champs dans les deux bobines B1, B2.

On a déjà réalisé de nombreux dispositifs indicateurs répondant à la définition ci-dessus.

En particulier, on a réalisé de nombreux dispositifs indicateurs de niveau de liquide, notamment de carburant, répondant à cette définition. Dans le cadre de cette application particulière à la mesure de niveau de liquide, le capteur Ca est formé généralement d'une piste résistive sur laquelle se déplace un curseur actionné par un flotteur qui suit les variations du niveau de liquide.

L'homme de l'art sait que le niveau de carburant d'un réservoir de véhicule automobile est très sensible aux accélérations/décélérations de ce dernier.

Par conséquent, on a déjà imaginé différents moyens pour éviter que ces fluctuations intempestives du niveau de liquide jaugé ne se traduisent par des oscillations de l'indication délivrée par l'indicateur.

Comme décrit dans le document FR-A-2561379, on a proposé par exemple des dispositifs opérant un amortissement mécanique sur le capteur à flotteur Ca. Plus précisément selon ce document, il a été proposé de monter le flotteur commandant le capteur Ca sur une première extrémité d'un levier et de lier en rotation la seconde extrémité du levier au pignon d'entrée d'un train d'engrenages multiplicateur constituant le dispositif amortisseur.

On a également proposé, comme décrit par exemple dans le document FR-A-2592479, de réaliser un amortissement électrique du signal issu du capteur Ca. Comme on l'a schématisé sur la figure 2, les dispositifs conformes à l'enseignement de ce document comprennent entre autres un filtre passe-bas analogique PB intercalé entre la sortie du capteur Ca et l'entrée de l'indicateur logométrique Log, soit le point commun aux deux bobines B1, B2. Plus précisément, un tel filtre passe-base PB comprend une résistance série R1 et un condensateur parallèle C1 relié à la masse.

Plus précisément encore, comme celà est schématisé sur la figure 2, les circuits d'amortissement électrique Cae intercalés entre un capteur Ca et un indicateur logométrique Log, comprennent généralement un circuit pilote référencé "PWM" sur la figure 2, qui attaque l'entrée de l'indicateur Log à l'aide d'un signal électrique périodique et rectangulaire dont le rapport cyclique dépend de l'amplitude du signal issu du filtre passe-bas PB.

On a déjà commercialisé de très nombreux dispositifs indicateurs conformes à l'enseignement de ce document FR-A-2592479 et schématisés sur la figure 2 annexée.

Toutefois, ces dispositifs ne donnent pas toujours pleinement satisfaction.

En particulier, la demanderesse a constaté que les capacités C1 des filtres passe-bas analogiques PS présentent des fuites non négligeables ce qui réduit en pratique la valeur et la stabilité des constantes de temps réalisables.

Par ailleurs, la disposition d'un tel filtre amortisseur Cae, PB entre le capteur Ca et l'indicateur Log a nécessité la réalisation d'indicateurs Log présentant des caractéristiques spécifiques telles que ces derniers ne peuvent être utilisés en combinaison avec les capteurs Ca classiques, sans le filtre Cae, PB. On comprend que la réalisation de tels moyens spécifiques entraînent des problèmes inévitables de référence et d'approvisionnement.

Le document DE-A-36 31 285 décrit un système de commande d'indicateur à champ tournant comprenant des moyens aptes à définir une résistance analogique assurant le pilotage de l'alimentation de l'indicateur, sur la base d'une valeur prédéterminée numérique sélectionnable. A cette fin le document DE-A-36 31 285 divulgue un système comprenant une cellule de sortie formée d'un transistor et d'une résistance placée en parallèle du trajet de conduction principal du transistor, et une résistance shunt placée en série de cette cellule de sortie pour mesurer le courant circulant dans celle-ci et dans l'indicateur. La résistance analogique précitée est formée par la combinaison de cette cellule de sortie (transistor et résistance parallèle) et de la résistance shunt. Le système comprend en outre un multiplicateur adapté pour multiplier la valeur numérique d'entrée par le signal prélevé sur la résistance shunt, un convertisseur numérique/analogique relié à la sortie du multiplicateur par l'intermédiaire d'un réseau de résistances et un soustracteur qui compare le signal de sortie du convertisseur numérique/analogique et le signal appliqué à l'indicateur, la sortie de ce soustracteur étant utilisée pour piloter l'entrée de commande du transistor de sortie.

La présente invention a maintenant pour but de perfectionner l'état de la technique antérieure en proposant de nouveaux moyens de filtrage du signal issu d'un capteur résistif Ca, qui puissent être utilisés avec un capteur résistif Ca et une charge Log classiques.

Ce but est atteint dans le cadre de la présente invention grâce à un circuit du type défini en revendication 1 annexée, qui est délimitée sous forme d'un préambule et d'une partie caractérisante, par rapport au document DE-A-36 31 285.

Selon une autre caractéristique avantageuse de la présente invention, le convertisseur numérique/impédance comprend des moyens de mesure de la tension aux bornes de la charge et un étage de sortie du type source de courant commandé pour délivrer un courant proportionnel au rapport entre la tension mesurée aux bornes de la charge et la résistance de sortie du capteur.

Selon un mode de réalisation préférentiel le module formant convertisseur numérique/impédance conforme à la présente invention est formé d'un réseau de résistances et d'un convertisseur d'impédance.

Selon une caractéristique avantageuse de la présente invention le convertisseur d'impédance précité comprend une résistance shunt connectée en série de la sortie du réseau de résistances, un premier étage de recopie de potentiel apte à recopier, aux bornes de la sortie du réseau de résistances la tension présente à l'entrée de la charge, un générateur de courant relié en série d'une résistance et formant un ensemble connecté aux bornes de l'entrée de la charge et un second étage de recopie de potentiel apte à recopier la tension aux bornes de la résistance shunt sur la résistance connectée en série de la source de courant.

Selon un mode de réalisation préférentiel, les éléments de filtrage numériques comprennent un étage comparateur qui reçoit sur une première de ses entrées, le signal de sortie du capteur, un compteur/décompteur recevant sur une entrée un signal d'horloge à fréquence constante, et sur son entrée de commande de comptage/décomptage la sortie de l'étage comparateur, et un réseau de résistances relié entre la sortie du compteur/décompteur et la seconde entrée de l'étage comparateur.

Selon une autre caractéristique avantageuse de la présente invention, les moyens de filtrage numérique comprennent :

- des moyens de détection aptes à détecter les croisements entre le signal d'entrée et une valeur filtrée de ce signal d'entrée,
- des moyens de temporisation relancés à chaque croisement décelé par les moyens de détection,
- des moyens de blocage du filtre si aucun croisement n'est décelé par les moyens de détection avant la fin de la temporisation, et
- des moyens de déblocage du filtre lors du premier croisement décelé par les moyens de détection après blocage du filtre.

Selon une autre caractéristique avantageuse de la présente invention, les moyens de blocage comprennent des moyens aptes à modifier la constante de temps du filtre.

La présente invention concerne également les systèmes équipés du circuit précité.

D'autres caractéristiques, buts et avantages de la présente invention apparaîtront à la lecture de la description détaillée qui va suivre, et en regard des dessins annexés donnés à titre d'exemples non limitatifs et sur lesquels :

- les figures 1 et 2 précédemment décrites représentent des dispositifs conformes à l'état de la technique,
- la figure 3 représente une vue schématique d'un dispositif indicateur conforme à la présente invention,
- la figure 4 représente plus en détail, sous forme de blocs fonctionnels, un dispositif conforme à la présente invention,
- la figure 5 représente un mode de réalisation préférentiel d'un convertisseur d'impédance conforme à la présente invention,
- la figure 6 illustre la réalisation préférentielle du dispositif conforme à la présente invention sous forme d'un circuit intégré,
- la figure 7 représente un réseau de résistances R/2R utilisé dans le cadre de la présente invention,
- la figure 8 représente une variante de réalisation d'un réseau de résistances R/2R utilisé dans le cadre de la présente invention,
- la figure 9 représente un autre réseau de résistances utilisé dans le cadre de la présente invention,
- la figure 10 illustre une variante de réalisation d'un convertisseur d'impédance conforme à la présente invention,

- la figure 11 représente schématiquement une autre variante de réalisation d'un dispositif indicateur conforme à la présente invention,
- la figure 12 représente schématiquement une autre variante de réalisation d'un convertisseur numérique/impédance conforme à la présente invention,
- la figure 13 représente un circuit redresseur double alternance pouvant être utilisé dans le cadre de la présente invention,
- la figure 14 représente une variante de réalisation d'un dispositif conforme à la présente invention,
- la figure 15 représente un mode de réalisation préférentiel d'un filtre conforme à la présente invention,
- la figure 16 illustre schématiquement le niveau réel d'un liquide dans un réservoir, le signal d'entrée appliqué au filtre, issu d'un capteur et le niveau filtré en sortie de ce filtre, et
- la figure 17 représente une variante de réalisation du dispositif conforme à la présente invention.

Comme on l'a indiqué précédemment, le dispositif indicateur conforme à la présente invention, comprend essentiellement un moyen de filtrage numérique 100 et un module 200 formant convertisseur numérique/impédance, intercalés en série entre la sortie d'un capteur Ca et l'entrée d'une charge, par exemple d'un indicateur logométrique Log.

Pour simplifier l'exposé, dans la suite de la description, on présentera des modes de réalisation du système dans lesquels la charge est formée d'un indicateur logométrique. Toutefois, la présente invention n'est pas limitée à l'utilisation d'un indicateur logométrique. Elle s'étend en particulier à l'utilisation de tout indicateur analogique de type électromagnétique, notamment magnéto-électrique et d'une façon générale à toute charge à commande électrique adaptée pour être commandée par un capteur résistif.

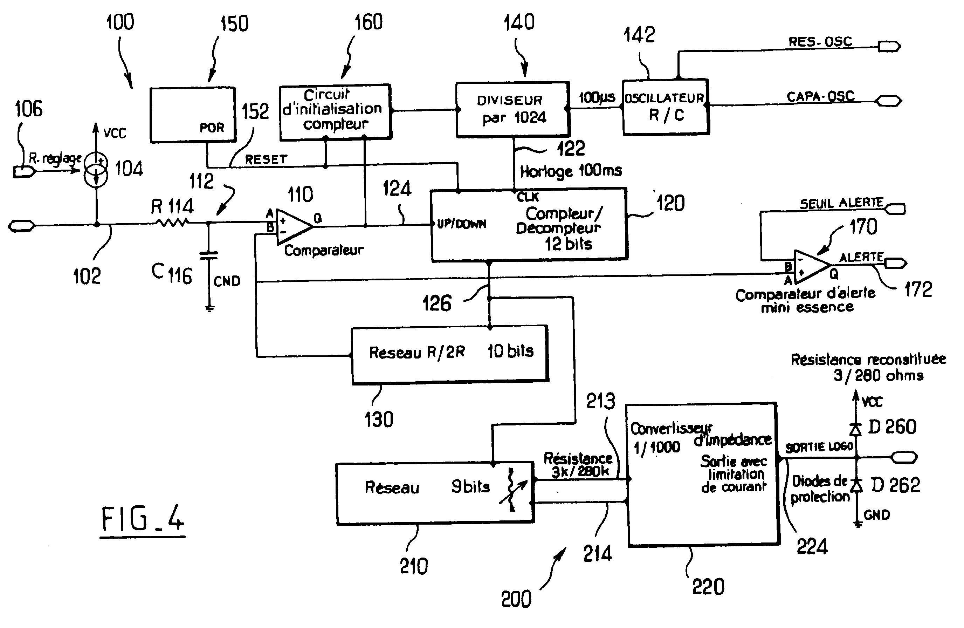

On va maintenant préciser la structure de ces moyens 100, 200 conformes à un mode de réalisation préférentiel de la présente invention en regard des figures 4 et suivantes.

Sur la figure 4, l'entrée des moyens de filtrage numérique 100 reliée à la sortie du capteur Ca est référencée 102.

Comme schématisé sur la figure 4, le capteur Ca est de préférence alimenté par une source de courant constant 104. De préférence, celle-ci est réglable par l'intermédiaire d'une entrée 106.

Comme indiqué précédemment, les moyens de filtrage numériques 100 représentés sur la figure 4, comprennent essentiellement un comparateur 110, un compteur/décompteur 120 et un réseau de résistances 130.

Le comparateur 110 reçoit sur une première de ses entrées, référencée A sur la figure 4, le signal de sortie du capteur Ca, soit le signal disponible sur l'entrée 102. Plus précisément, de préférence, un filtre passe-bas 112 est intercalé entre cette entrée 102 et l'entrée A du comparateur 110. Le filtre passe-bas 112 comprend une résistance R114 connectée en série entre l'entrée 102 du circuit et l'entrée A du comparateur 110, ainsi qu'un condensateur C116 reliant la sortie du filtre 112, soit l'entrée A du comparateur 110, à la masse.

La sortie du comparateur 110 bascule entre deux états selon que le signal reçu sur son entrée A est ou non supérieur au signal appliqué sur sa seconde entrée B.

Le compteur/décompteur 120 reçoit sur son entrée 122 un signal d'horloge de fréquence constante, par exemple d'une période de 100ms. L'entrée de commande de comptage/décomptage 124 du compteur/décompteur 120 est reliée à la sortie Q du comparateur 110.

Ainsi selon l'état de la sortie du comparateur 110, le comparateur/décompteur 120 alternativement compte et décompte au rythme du signal d'horloge appliqué sur son entrée 122.

Les sorties 126 du compteur/décompteur 120 attaquent l'entrée du réseau de résistances 130. La sortie de ce dernier est reliée à la seconde entrée B du comparateur 110.

L'homme de l'art comprendra aisément que le signal numérique formé par les sorties 126 du compteur/décompteur 120 est représentatif du niveau de sortie du capteur Ca (entrée 102), et par conséquent de l'amplitude de la grandeur physique mesurée, par exemple un niveau de carburant dans un réservoir de véhicule automobile.

Plus précisément encore, de préférence, pour éviter une évolution permanente du signal de référence issu du réseau 130 et appliqué sur l'entrée B du comparateur 110, le réseau de résistances 130 n'exploite pas les bits de poids faible du compteur/décompteur 120.

Ainsi par exemple, pour un compteur/décompteur 120 d'une capacité de douze bits, le réseau de résistances 130 peut n'exploiter que les dix bits de poids le plus fort de la sortie du compteur/décompteur 120.

L'homme de l'art comprendra aisément que l'exploitation des bits de poids fort du compteur/décompteur 120 et le cadencement du compteur/décompteur par un signal d'horloge sur son entrée 122, génèrent un filtrage numérique sur le signal appliqué à l'entrée 102.

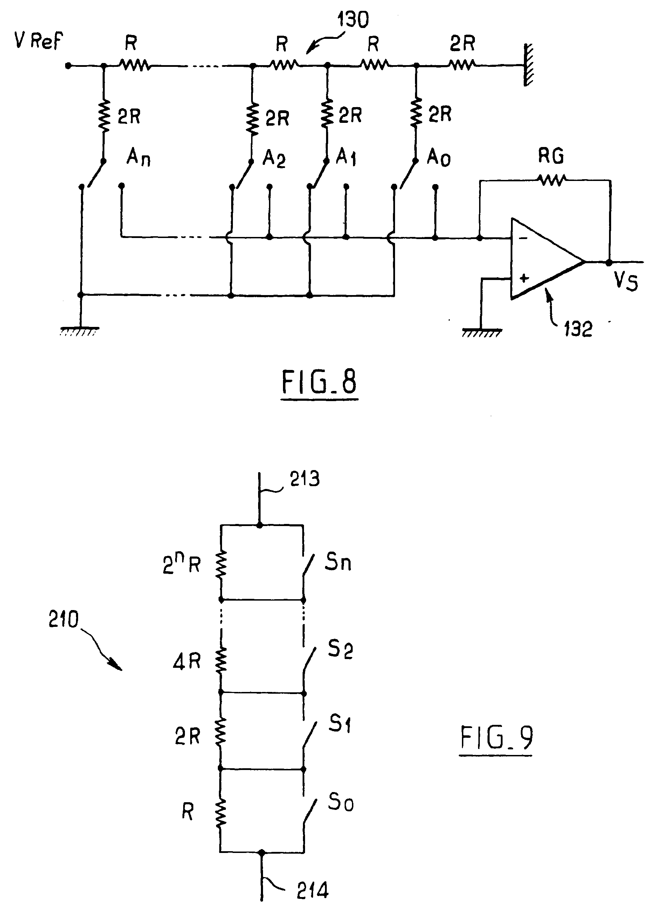

Selon un mode de réalisation préférentiel, le réseau de résistances 130 est formé d'un réseau dit R/2R du type représenté sur la figure 7.

Un tel réseau 130 de résistances comprend tout d'abord un pont diviseur comportant plusieurs résistances de valeur égale R connectées en série, par l'intermédiaire d'une résistance de valeur 2R, entre la masse et la sortie du réseau. La résistance 2R est placée à l'extrémité côté masse du pont diviseur. Le nombre de résistances R ou 2R du pont diviseur est égal au nombre de bits exploités du compteur/décompteur 120. Chaque point commun à deux résistances adjacentes de ce pont diviseur ainsi que le point de sortie de celui-ci, est par ailleurs relié par l'intermédiaire d'une résistance 2R à un inverseur A0, A1, A2, ...An. Chaque inverseur A0 à An est commandé respectivement par une sortie associée du compteur/décompteur 120. Plus précisément, l'inverseur An le plus proche de la sortie du réseau 130 est commandé par le bit de poids le plus fort, tandis que l'inverseur A0 le plus proche de la masse est commandé par le bit de poids le plus faible utilisé.

Ainsi selon l'état de la sortie associée du compteur/décompteur 120, chaque inverseur A0 à An relie la résistance correspondante 2R soit à la masse soit à une tension de référence VRef.

La sortie du réseau 130, appliquée à l'entrée B du comparateur 110, fournit un signal :

$$Vs = Vref [An/2+...+A3/2^{n-2}+A2/2^{n-1}+A1/2^{n}+A0/2^{n+1}]$$

On retrouve sur la variante du réseau 130 représentée sur la figure 8, un pont diviseur comportant plusieurs résistances de valeur égale R connectées en série, par l'intermédiaire d'une résistance de valeur 2R, entre la masse, et une valeur de référence VRef. La résistance 2R est placée à l'extrémité côté masse du pont diviseur. Le nombre de résistances R ou 2R du pont diviseur est égal au nombre de bits exploités du compteur/décompteur 120. Chaque point commun à deux résistances adjacentes de ce pont diviseur, ainsi que son extrémité recevant la tension de référence VRef est par ailleurs relié, par l'intermédiaire d'une résistance de valeur 2R, à un inverseur A0, A1, A2 ... An. Chaque inverseur A0 à An est commandé respectivement par une sortie associée du compteur/décompteur 120. Plus précisément, l'inverseur An le plus proche de la tension de référence VRef est commandé par le bit de poids le plus fort, tandis que l'inverseur A0 le plus proche de la masse est commandé par le bit de poids le plus faible utilisé. Selon l'état de la sortie associée du compteur/décompteur 120, chaque inverseur A0 à An relie la résistance 2R correspondante soit à la masse soit à l'entrée inverseuse d'un amplificateur opérationnel 132. ce dernier a son entrée non inverseuse à la masse, et sa sortie rebouclée sur son entrée inverseuse par l'intermédiaire d'une résistance RG. La sortie du réseau 130 représentée sur la figure 8 est disponible à la sortie de l'amplificateur opérationnel 132.

Cette sortie fournit un signal :

$$Vs=RG.VRef.(An+ ... +A2/2^{n-2}+A1/2^{n-1}+A0/2^{n})2R.$$

De préférence, le signal d'horloge appliqué sur l'entrée 122 du compteur/décompteur 120 est issu d'un diviseur 140 relié à un oscillateur 142. A titre d'exemple, l'oscillateur 142 peut délivrer un signal de période constante de $100\mu s$, le diviseur 140 opérant une division par 1024.

Pour permettre à l'appareil indicateur Log d'atteindre rapidement son point de fonctionnement malgré la présence du filtrage numérique, il est prévu des moyens aptes à modifier la fréquence du signal d'horloge appliqué au compteur/décompteur 120, lors d'une mise sous tension. Ces moyens comprennent un module 150 détecteur de mise sous tension et un circuit d'initialisation 160. Lors d'une détection de mise sous tension le module 150, par sa sortie 152 opère une remise à zéro du compteur/décompteur 120 et valide le circuit d'initialisation 160. Ce dernier agit alors sur le diviseur 140 pour court-circuiter celui-ci, ou tout du moins modifier son facteur de division afin d'élever la fréquence du signal d'horloge appliqué à l'entrée 122 du compteur/décompteur 120.

De préférence, la sortie Q du comparateur 110 est également reliée au circuit d'initialisation 160. Après une remise à zéro du compteur/décompteur 120 suite à une détection de mise sous tension, la sortie de celui-ci croit progressivement jusqu'à la valeur mesurée, puis tend à osciller de part et d'autre de celle-ci. Après X passages à zéro de la sortie du comparateur 110, le circuit d'initialisation 160 peut ainsi considérer que le régime permanent est atteint et interrompre alors l'inhibition du diviseur 140.

De préférence, il est prévu des moyens de détection d'alerte comprenant un comparateur 170 recevant sur une première de ses entrées le signal de sortie du réseau 130 (représentative de la grandeur physique mesurée) et sur une seconde de ses entrées un seuil d'alerte. La sortie 172 du comparateur 170 peut être utilisée par exemple pour piloter un indicateur ou témoin lumineux.

Comme indiqué précédemment, le convertisseur 200 a pour fonction de présenter à l'indicateur Log une impédance de sortie variable et fonction du signal de sortie du moyen de filtrage numérique 100, laquelle impédance est équivalente à la résistance de sortie du capteur Ca.

Selon le mode de réalisation préférentiel représenté sur la figure 4, le convertisseur numérique/impédance 200 comprend un réseau de résistances 210 et un convertisseur d'impédance 220.

Le réseau 210 est formé de préférence d'un réseau du type représenté sur la figure 9.

Le réseau 210 est piloté par la sortie 126 du compteur/décompteur.

Le réseau 210 comprend des interrupteurs S0 à Sn connectés en série entre les deux bornes de sortie 213, 214 du réseau 210. Chaque interrupteur S0 à Sn est connecté en parallèle d'une résistance. Plus précisément, ces résistances ont des valeurs croissantes $2^n R$, où n représente l'ordre de l'interrupteur associé, c'est-à-dire le poids du bit correspondant de la sortie du compteur/décompteur 120.

Là encore, les interrupteurs S0 à Sn sont pilotés par les bits de poids fort du compteur/décompteur 120. De préférence, le réseau 210 exploite un bit de poids faible de moins que le réseau 130. Ainsi pour un compteur/décompteur 120 d'une capacité de 12 bits, le réseau 210 comprend de préférence neuf interrupteurs S pilotés par les bits de poids le plus fort du compteur/décompteur 120.

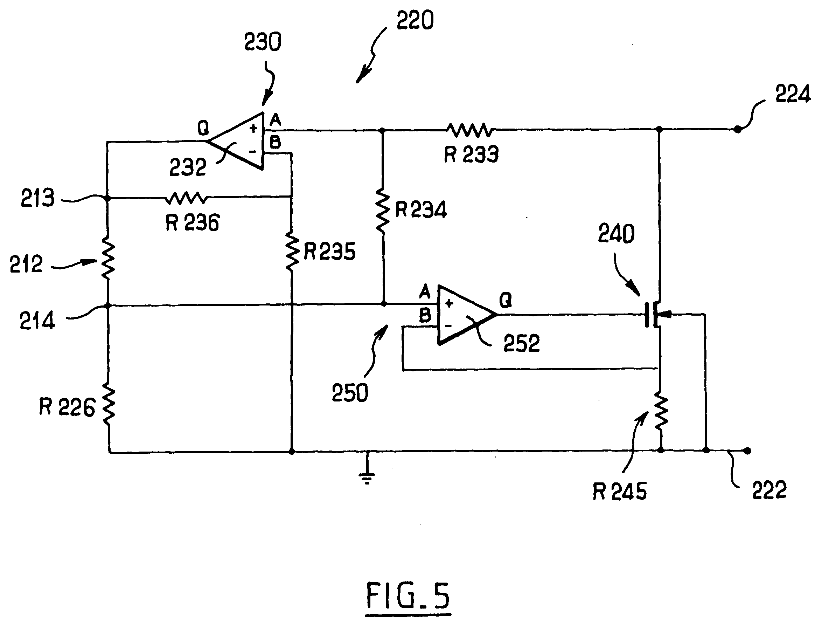

Le réseau 210 est relié à l'entrée du convertisseur d'impédance 220 dont le mode de réalisation est détaillé sur la figure 5.

Sur cette figure 5, on a schématisé sous la référence R212 la résistance de sortie du réseau 210.

Les entrées du dispositif logométrique Log doivent être connectées entre une borne de masse 222 et une sortie 224 du convertisseur.

Le convertisseur d'impédance 220 comprend essentiellement une résistance shunt R226, un premier étage de recopie de potentiel 230, une source de courant 240, une résistance R245, et un second étage de recopie de potentiel 250.

La résistance R226 est connectée en série de la sortie R212 du réseau 210.

Le premier étage de recopie de potentiel 230 a pour but de recopier la tension présente entre les sorties 222, 224 du convertisseur d'impédance 220, soit sur l'entrée du dispositif indicateur Log, sur la sortie R212 du réseau 210.

A cette fin, l'étage de recopie 230 comprend un amplificateur opérationnel 232 dont l'entrée non inverseuse est reliée d'une part, par l'intermédiaire d'une première résistance R233 à la sortie 224 et d'autre part, par l'intermédiaire d'une deuxième résistance R234 au point commun à la sortie du réseau 210 et à la résistance shunt R226.

L'entrée inverseuse de l'amplificateur opérationnel 232 est reliée d'une part par l'intermédiaire d'une résistance R235 à la ligne de masse 222 et d'autre part par l'intermédiaire d'une résistance R236 à la sortie de l'amplificateur opérationnel 232. Cette sortie de l'amplificateur opérationnel 232 est par ailleurs reliée à la sortie du réseau 210 opposée à la résistance shunt R226.

Pour permettre de recopier la tension présente entre les sorties 222, 224 sur la sortie R212 du réseau 210, les quatre résistances R233, R234, R235, R236 sont de valeur identique.

Ainsi on obtient en effet sur la borne 213 du réseau 210 un potentiel égal à la somme de la tension aux bornes de la résistance R226 et de la tension aux bornes de l'entrée du logomètre Log, soit cette dernière tension aux bornes du réseau 210.

La résistance shunt R226 est parcourue par le même courant que la sortie du réseau 210 schématisée sous forme de la résistance R212 sur la figure 5.

La source de courant 240 est formée d'un transistor, tel que par exemple un MOS-FET. Son trajet de conduction principale est connecté en série de la résistance R245 entre les sorties 222, 224. La résistance R245 présente une valeur plus faible que la résistance R226. A titre indicatif et non limitatif, la résistance R245 peut avoir une valeur égale au 1000ème de la résistance R226, soit par exemple une valeur de 1ohm pour la résistance R245 et une valeur de 1Kohm pour la résistance R226. Le deuxième étage de recopie de potentiel 250 a pour but de recopier aux bornes de la résistance R245 la tension présente aux bornes de la résistance R226.

A cette fin, l'étage 250 est formé de préférence d'un amplificateur opérationnel 252. L'entrée non inverseuse de celui-ci est reliée au point commun au réseau 210 et à la résistance shunt R226. L'entrée inverseuse du comparateur 252 est reliée au point commun au transistor 240 et à la résistance R245. Enfin, la sortie Q du comparateur 252 attaque l'électrode de commande du transistor 240.

L'homme de l'art comprendra qu'ainsi, le courant circulant dans la résistance R245 est proportionnel au courant circulant dans la sortie du réseau 210 avec un facteur de proportionnalité égal au rapport entre les résistances R226 et R245. Et ce courant débité par le transistor 240 est proportionnel au rapport entre la tension aux bornes 222-224 de la charge et la résistance de sortie du capteur.

Par conséquent, la sortie du convertisseur d'impédance 220 prise entre les bornes 222, 224 se comporte pour le dispositif indicateur Log comme une résistance proportionnelle à R212/k en appelant k le facteur de proportionnalité entre les résistances R226 et R245, soit $R226 = k\,R245$.

En d'autres termes, le convertisseur 220 permet de convertir l'impédance de sortie du réseau 210 en une impédance de valeur proportionnelle beaucoup plus faible.

Ainsi, l'utilisation du convertisseur d'impédance 220 conforme à la présente invention permet d'exploiter un réseau de résistances 210 présentant des résistances de valeur importante, en tout cas nettement supérieure aux impédances parasites des interrupteurs de commande S0 à Sn, tout en disposant en sortie du convertisseur 220 d'une impédance faible, comparable à l'impédance de sortie de capteurs Ca classiques, soit typiquement de 0 à 280ohms.

L'homme de l'art comprendra que pour obtenir des impédances très faibles afin de commander le logomètre Log sans disposer du convertisseur d'impédance 220, il serait nécessaire de réaliser le réseau 210 à l'aide de résistances par rapport auxquelles les résistances parasites des transistors de commande S0 à Sn ne seraient plus négligeables. L'utilisation du convertisseur d'impédance 220 conforme à la présente invention permet par conséquent d'améliorer nettement la fiabilité et la précision du dispositif.

Comme schématisé sur la figure 4 de préférence, la sortie 224 du convertisseur d'impédance 220 est protégée par deux diodes D260, D262 connectées respectivement, pour la diode D260, cathode au +Vcc et anode à la sortie 224, et pour la diode D262, cathode à la sortie 224 et anode à la masse.

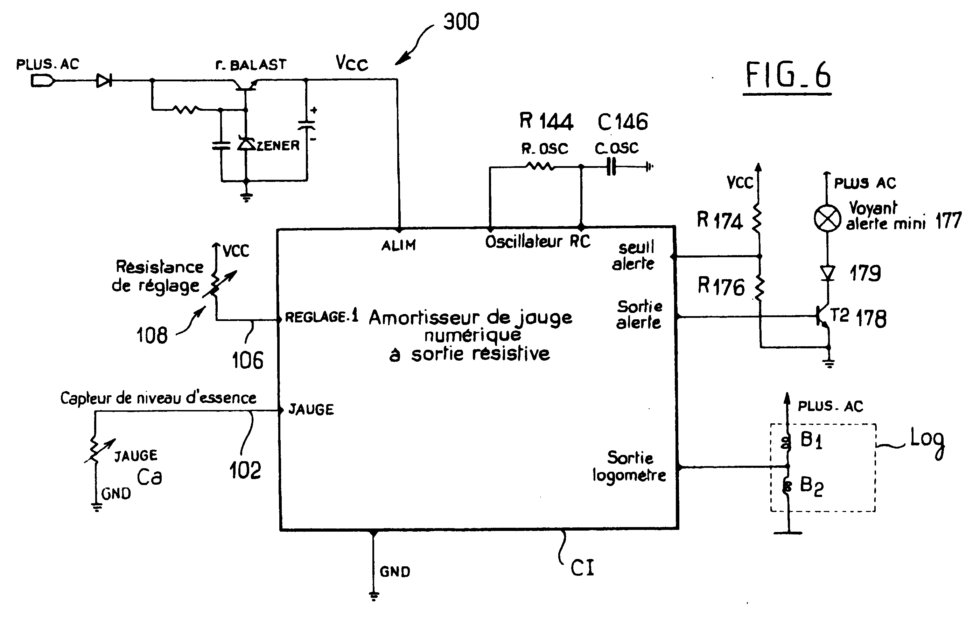

Comme schématisé sur la figure 6, l'ensemble du circuit composant les moyens de filtrage numérique 100 et le convertisseur numérique/impédance 200 représentés sur les figures 4 et 5 peut être réalisé sous forme d'un cicuit intégré CI. Ce circuit intégré CI peut être alimenté par un circuit régulateur de tension 300 de structure classique en soi. Sur la figure 6, on a représenté sous la référence 108, une résistance de réglage de la source de courant 104 connectée à l'entrée 106 du circuit.

L'oscillateur 142 peut être intégré au circuit CI et comprendre comme représenté sur la figure 6, une résistance R144 et une capacité C146 externes.

Sur la figure 6, on a schématisé sous forme d'un pont diviseur résistif R174, R176 les moyens définissant le seuil d'alerte appliqué au comparateur 170. Le pont diviseur précité comprend deux résistances R174,R176 connectées entre une borne d'alimentation +Vcc et la masse. Le point commun aux deux résistances R174, R176 attaque l'entrée inverseuse du comparateur 170.

On a représenté sur la figure 6, un module de commande d'un témoin d'alerte 177. Ce module comprend un transistor 178 dont l'entrée de commande est reliée à la sortie 172 et dont le trajet de conduction principale est connecté par l'intermédiaire d'une diode 179 en série du témoin 177.

Enfin, on a schématisé sur la figure 6, la jauge Ca reliée à l'entrée 102 du circuit et le dispositif indicateur Log comprenant deux bobines B1, B2 dont le point commun est relié à la sortie du convertisseur d'impédance 220.

Le circuit qui vient d'être décrit peut faire l'objet de diverses variantes de réalisation.

Ainsi par exemple, le seuil d'alerte au lieu d'être défini par un pont diviseur R174, R176 peut être défini dans une mémoire non volatile. Il en est de même pour le paramètre de réglage du générateur de courant 104 (défini par la résistance 108 selon la figure 6) et le choix de la constante de temps (définie par les composants R144 et C146 sur la figure 6).

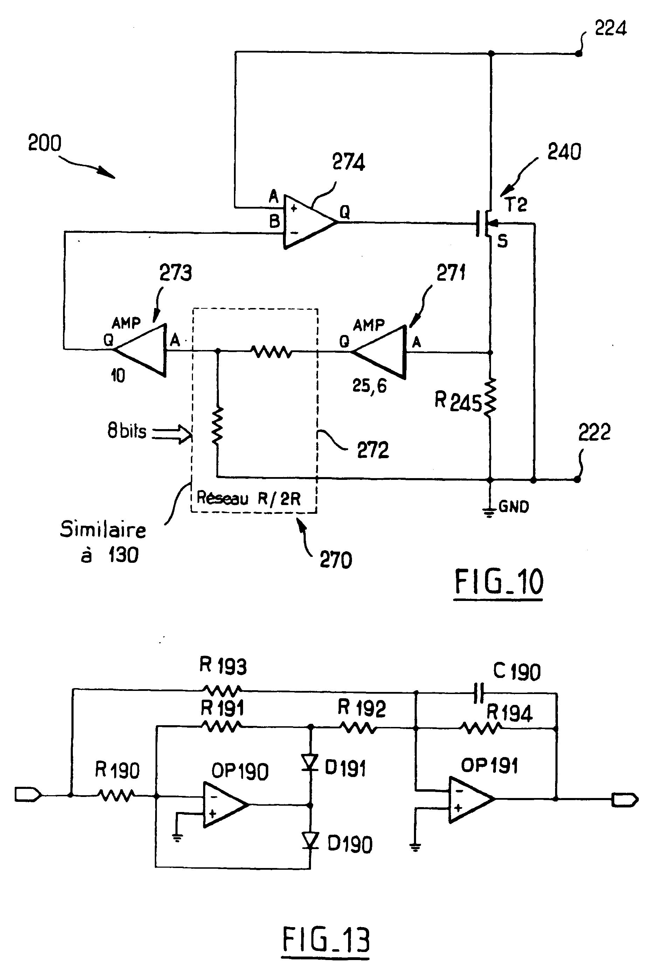

On va maintenant décrire la variante de réalisation du module formant convertisseur numérique/impédance 200 représenté sur la figure 10.

Là encore, l'indicateur logométrique doit être relié entre la masse 222 et la sortie 224 du convertisseur 200. On retrouve sur le module 200 représenté sur la figure 10, en série entre les bornes 224 et 222, une source de courant 240, formée de préférence d'un transistor tel qu'un transistor MOS-FET, et une résistance R245.

La source de courant 240 est pilotée par un amplificateur à gain variable 270 dans lequel intervient un réseau de résistances 272 lui-même commandé par la sortie des moyens de filtrage numérique 100.

Plus précisément, de préférence, la source de courant 250 est pilotée par un amplificateur et un atténuateur formé par ledit réseau de résistances.

Plus précisément encore, il est prévu de préférence pour piloter la source de courant 240, successivement, entre la résistance R245 et la grille de commande de la source de courant 240, un premier amplificateur 271, un atténuateur à résistances 272 piloté par la sortie des moyens de filtrage numérique 100 et un second amplificateur 273.

Ainsi, on aperçoit sur la figure 10 annexée un premier amplificateur 271, par exemple de gain égal à 25,6 dont l'entrée est reliée au point commun à la résistance R245 et à la source 240.

L'atténuateur 272 est relié à la sortie de l'amplificateur 271. L'atténuateur 272 peut être formé d'un réseau de résistances conforme aux dispositions décrites précédemment en regard des figures 7 ou 8 sous réserve de relier la sortie de l'amplificateur 271 à la borne recevant la tension de référence selon les figures 7 et 8.

L'atténuateur 272 attaque l'entrée de l'amplificateur 273. Celui-ci possède typiquement un gain égal à 10.

La sortie de l'amplificateur 273 attaque la première entrée d'un comparateur 274. La seconde entrée de ce comparateur 274 reçoit le potentiel présent sur la borne de sortie 224.

Enfin, la sortie de l'amplificateur 274 attaque la grille de commande de la source de courant 240.

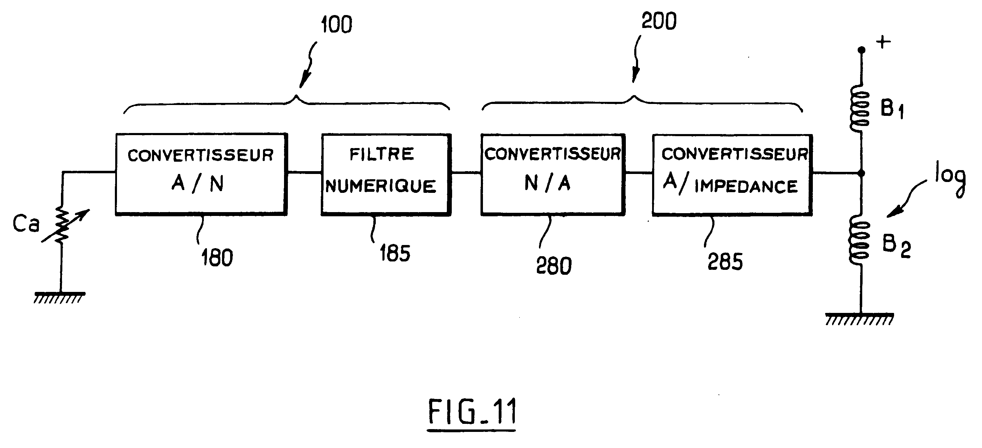

On va maintenant décrire la variante de réalisation représentée sur la figure 11.

Selon cette variante les moyens de filtrage numérique 100 comprennent en série un convertisseur analogique/numérique 180 et un filtre numérique 185.

Par ailleurs, selon la variante représentée sur la figure 11, les moyens convertisseurs numérique/impédance 200 comprennent en série un convertisseur numérique/analogique 280 et un convertisseur analogique/impédance 285.

Bien entendu, on peut envisager une combinaison de la variante de réalisation représentée sur la figure 11, avec les moyens décrits antérieurement en regard des figures 4 à 10 à titre préférentiel.

Ainsi, on peut combiner des moyens de filtrage numérique 100 comprenant en série un convertisseur analogique/numérique 180 et un filtre numérique 185, comme représenté sur la figure 11 avec un convertisseur numérique/impédance 200 tel que représenté sur les figures 4, 5 et 10. De même, on peut envisager de combiner des moyens de filtrage numérique 100 du type représenté sur la figure 4 avec des moyens convertisseurs numérique/impédance comprenant en série un convertisseur numérique/analogique 280 et un convertisseur analogique/impédance 285 comme représenté sur la figure 11.

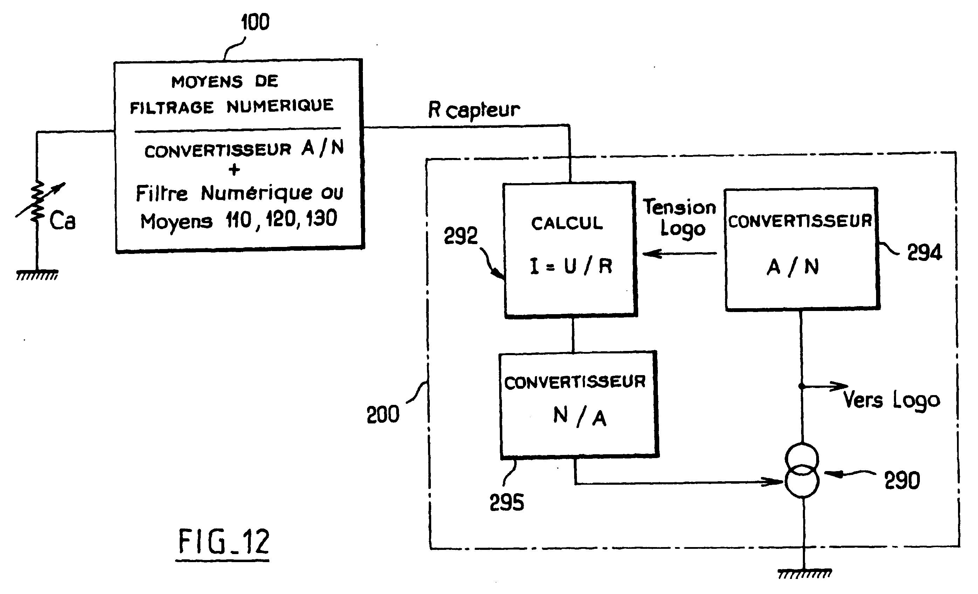

On a représenté sur la figure 12, une variante de réalisation d'un module formant convertisseur numérique/impédance 200. Comme cela est schématisé sur la figure 12, cette variante du module 200 peut être utilisée soit avec des moyens de filtrage numérique 100 comprenant en combinaison un convertisseur analogique/numérique et un filtre numérique comme représenté sur la figure 11, soit avec des moyens de filtrage numérique 100 conformes à ceux représentés sur la figure 4, c'est-à-dire comprenant en combinaison un comparateur 110, un compteur/décompteur 120 et un réseau de résistances 130.

Le module 200 comprend essentiellement une source de courant 290 reliée entre l'entrée de l'indicateur logométrique et la masse, associée à des moyens de commande 292 de la source de courant 290, de sorte que celle-ci débite un courant égal au rapport entre la tension d'entrée du logométre et la valeur de la résistance du capteur d'entrée Ca filtrée par les moyens 100.

Plus précisément encore, selon le mode de réalisation préférentiel représenté sur la figure 12, les moyens de commande 292 sont formés de moyens de calcul numérique qui reçoivent d'une part, une information numérique représentative de la résistance du capteur Ca prélevée à la sortie des moyens de filtrage numérique 100 et qui reçoivent d'autre part, une information numérique représentative de la tension d'entrée de l'indicateur logométrique par l'intermédiaire d'un convertisseur analogique/numérique 294.

La sortie des moyens de calcul 292 commande la source de courant 290 par l'intermédiaire d'un convertisseur numérique/analogique 295.

En variante, on peut bien entendu envisager d'utiliser non point des moyens de calcul 292 de type numérique, mais des moyens de calcul analogiques adaptés de la même façon pour imposer dans la source de courant 290 un courant égal au rapport entre la tension d'entrée de l'indicateur logométrique et la résistance du capteur Ca filtré par les moyens 100. Dans ce cas, les moyens de calcul analogique 292 peuvent recevoir l'information analogique représentative de la résistance du capteur à la sortie d'un réseau de résistances commandé par les moyens de filtrage 100. Il peut s'agir par exemple du réseau de résistance 130 représenté sur la figure 4. Dans ce cas, le réseau de résistance 130 constitue le moyen de convertion numérique/analogique. Par ailleurs, les moyens de calcul analogique 292 peuvent recevoir directement l'information de tension analogique présente aux bornes de l'entrée de l'indicateur logométrique. Les convertisseurs analogique/numérique 294 et numérique/analogique 295 sont alors inutiles.

En pratique, le circuit intégré CI intégrant les moyens de filtrage numérique 100 et le convertisseur numérique/impédance 200 peut être incorporé soit au capteur Ca, soit au dispositif indicateur Log, soit constituer un module intermédiaire indépendant.

Il est important de noter que la présente invention permet d'utiliser un capteur Ca et une charge Log standards classiques, par exemple une jauge de niveau Ca et un indicateur logométrique Log classiques. La présente invention permet ainsi une parfaite interchangeabilité. En d'autres termes, l'invention permet d'obtenir, en régime stabilisé, une relation identique entre la résistance du capteur et l'indication visualisée sur la charge ou indicateur, que le circuit de filtrage conforme à la présente invention soit présent ou non.

Bien entendu la présente invention n'est pas limitée aux modes de réalisation particuliers qui viennent d'être décrits mais s'étend à toute variante conforme à son esprit.

On a envisagé précédemment d'utiliser un capteur de type rhéostatique alimenté par une source de courant 104. Dans ce cas, l'information de mesure est formée par la tension aux bornes de la résistance variable ainsi constituée.

En variante, cependant, on peut envisager d'utiliser un capteur résistif de type potentiométrique, auquel cas la résistance du capteur est alimentée par une tension régulée et l'information de mesure est prélevée sur le curseur du potentiométre.

Il faut noter que grâce à la structure du circuit proposé dans le cadre de la présente invention, le courant traversant le capteur de jaugeage Ca ne correspond pas au courant circulant dans l'indicateur logométrique Log. On peut donc envisager, tout en maintenant un courant élevé de commande de l'indicateur logométrique, d'alimenter le capteur Ca sous faible courant, pour minimiser les effets d'électrolyse.

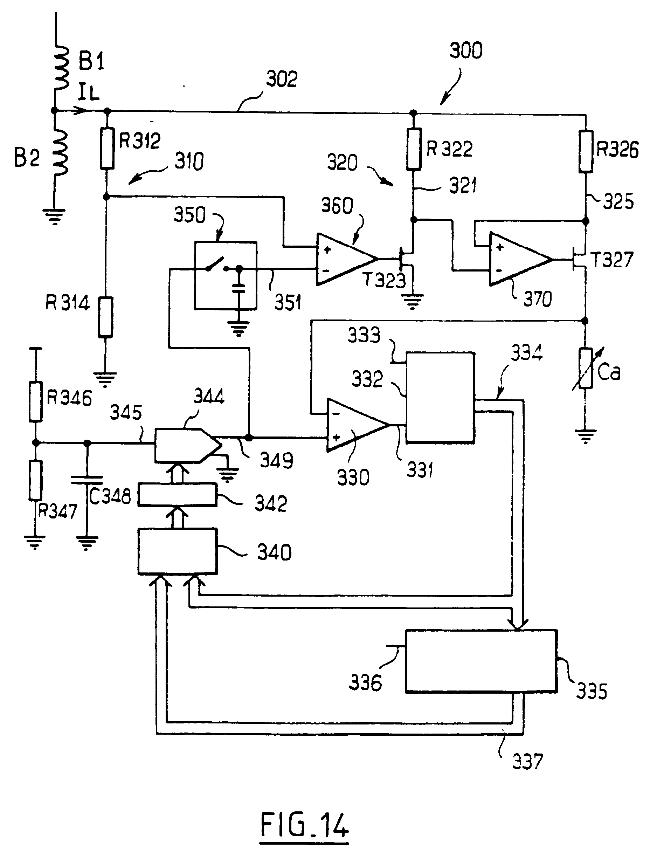

De même, pour éliminer les phénomènes d'électrolyse, lorsque la résistance de jaugeage Ca est plongée dans un liquide électriquement conducteur, on peut envisager d'alimenter le capteur Ca non pas par un courant ou une tension continue, mais par un courant ou une tension alternative, sous réserve d'intercaler entre la sortie du capteur ainsi alimenté et l'entrée des moyens de filtrage conformes à la présente invention, un redresseur. On a illustré par exemple sur la figure 13 annexée, un exemple de réalisation d'un circuit redresseur double alternance pouvant, à cet effet, être intercalé entre la sortie d'un capteur Ca alimenté en alternatif et les moyens de filtrage numérique 100 conformes à la présente invention. Le circuit de redressement double alternance de la figure 13 n'est donné qu'à titre d'exemple non limitatif.

Ce circuit de redressement comprend deux étages comprenant chacun un amplificateur OP190 et OP191 respectivement. Les entrées non inverseuses des amplificateurs OP190 et OP191 sont reliées à la masse.

L'entrée inverseuse de l'amplificateur opérationnel OP190 du premier étage est reliée à l'entrée du circuit par une résistance R190.

La même entrée inverseuse de l'amplificateur opérationnel OP190 est bouclée sur sa sortie par l'intermédiaire d'une diode D190 ayant sa cathode côté entrée inverseuse.

L'entrée inverseuse de l'amplificateur opérationnel OP190 est également rebouclée sur sa sortie par l'intermédiaire d'une branche comprenant en série une résistance R191 et une diode D191 dont la cathode est connectée à la sortie de OP190.

Le point commun à la résistance R191 et la diode D191 est relié à l'entrée inverseuse de OP191 par l'intermédiaire d'une résistance R192. La même entrée inverseuse de OP191 est reliée à l'entrée du circuit par une résistance R193. Enfin, l'entrée inverseuse de OP191 est bouclée sur sa sortie par l'intermédiaire d'une part, d'une résistance R194 et d'un condensateur C190 connectés en parallèle. La sortie du circuit redresseur est prélevé sur la sortie de OP191.

On va maintenant décrire la variante de réalisation du dispositif représenté sur la figure 14.

On retrouve sur cette figure 14 une charge de type logométrique comprenant deux bobinages B1 et B2 connectés en série entre une borne d'alimentation positive et la masse ainsi qu'un capteur résistif Ca. On retrouve également sur la figure 14 des moyens 310 conçus pour mesurer la tension aux bornes de la charge B1-B2 et un étage de sortie 320 du type source de courant piloté pour débiter un courant IL proportionnel au rapport entre la tension mesurée aux bornes de la charge B2 et la résistance du capteur Ca. Plus précisément selon le mode de réalisation représenté sur la figure 14 l'étage de sortie 320 comprend deux branches 321, 325 connectées en parallèle entre la sortie 302 du dispositif 300 et la masse.

La première branche 321 comprend une résistance R322 connectée en série du transistor T323 entre la sortie 302 et la masse.

La seconde branche 325 comprend une résistance R326 connectée en série d'un transistor T327 et du capteur Ca entre la même sortie 302 et la masse.

Les résistances R322, R326 sont de préférence de valeurs égales, ou tout au moins de rapport connu avec précision.

Comme on va l'expliquer par la suite, les moyens de commande de l'étage de sortie 320 comprennent un filtre numérique 335.

La tension prélevée aux bornes du capteur Ca est appliquée sur une première entrée d'un comparateur 330. Celui-ci est équivalent au comparateur 110 précité. La sortie 331 du comparateur 330 est appliquée à une entrée de commande en comptage/décomptage d'un compteur 332. Celui-ci est équivalent au compteur 120 précité. Il reçoit par ailleurs sur une entrée d'horloge 333 un signal de commande à fréquence constante. La sortie 334 du compteur 332 fournit un signal numérique représentatif de la tension aux bornes du capteur Ca. Cette sortie 334 du compteur 332 est appliquée d'une part à l'entrée du filtre numérique 335, d'autre part à l'entrée d'un multiplexeur 340.

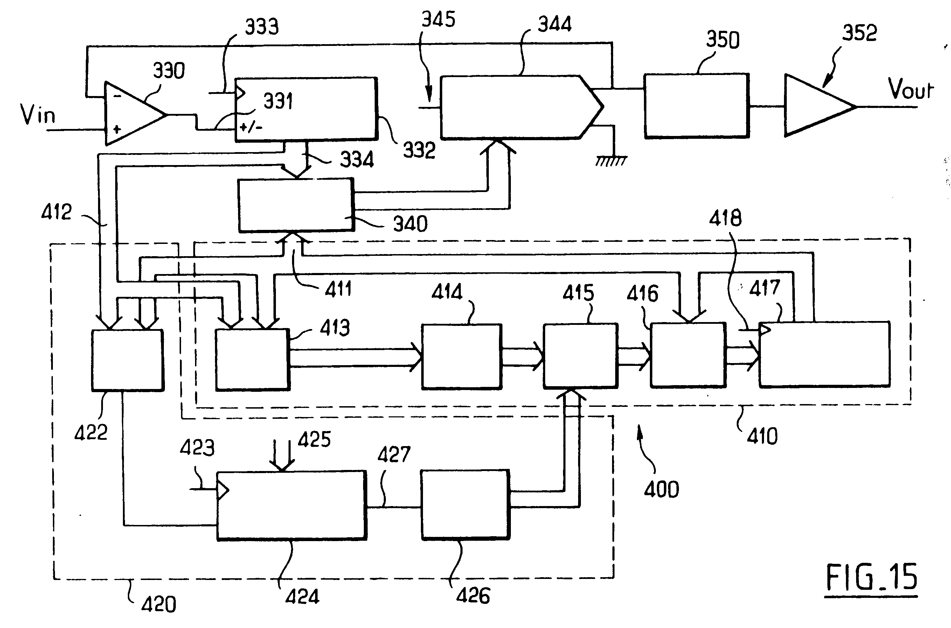

Le filtre numérique 335 peut faire l'objet de nombreux modes de réalisation. Un exemple sera décrit par la suite en regard de la figure 15. Le filtre numérique 335 est piloté par un signal d'horloge appliqué sur son entrée 336.

La sortie 337 du filtre numérique 335 est également appliquée au multiplexeur 340.

La sortie du multiplexeur 340 est reliée à l'entrée d'un ensemble de mémorisation 342, par exemple du type bascules D. La sortie de cet ensemble 342 est reliée à l'entrée d'un convertisseur numérique/analogique 344. Celui-ci reçoit sur son entrée 345 un signal de référence. Ce signal de référence est fourni par un pont diviseur filtré. Ce pont diviseur filtré comprend deux résistances R346, R347 connectées en série entre une borne d'alimentation positive et la masse. Le signal de référence prélevé au point commun entre les deux résistances R346 et R347 est filtré par une capacité C348 connectée en parallèle de la résistance R347.

Le signal numérique filtré disponible sur la sortie 349 du convertisseur 344 est appliqué à la seconde entrée du comparateur 330. En outre, la sortie 349 du convertisseur 344 est reliée à l'entrée d'un circuit échantillonneur/bloqueur 350. La sortie 351 de ce circuit 350 est reliée à la première entrée d'un amplificateur opérationnel 360.

Les moyens 310 de mesure de la tension aux bornes de la charge, plus précisément aux bornes du bobinage B2, comprennent un pont diviseur composé de deux résistances R312, R314 connectées en série entre la sortie 302 du circuit 300 (laquelle sortie 302 est destinée à être reliée au point commun entre les bobinages B1 et B2) et la masse.

La tension prélevée au point commun entre les deux résistances R312 et R314, représentative de la tension aux bornes du bobinage B2, est appliquée à la seconde entrée de l'amplificateur opérationnel 360.

Les impédances des résistances R312, R314 servant à la mesure de la tension aux bornes de la charge doivent être bien supérieures aux impédances des résistances R322 et R326, de sorte que le courant circulant dans le pont diviseur R312, R314 soit négligeable.

La sortie de l'amplificateur opérationnel 360 pilote la grille du transistor T323.

Ainsi cet amplificateur opérationnel 360 contrôle le transistor T323 et par conséquent le courant dans la branche 321 de sorte que la tension à la sortie de l'échantillonneur bloqueur 350 rejoigne la tension de référence mesurée au point intermédiaire du pont diviseur R312-R314.

La tension présente sur le point commun au transistor T323 et à la résistance R322 est appliquée à la première entrée d'un amplificateur opérationnel 370. Celui-ci reçoit sur sa seconde entrée le potentiel présent au point commun entre le transistor T327 et la résistance R326. Enfin, la sortie du comparateur 370 pilote la grille du transistor T327.

Ainsi l'amplificateur opérationnel 372 recopie sur la branche 325 un courant proportionnel à celui de la branche 321 avec un rapport égal au rapport entre les résistances R322 et R326.

On comprend que le filtre 335 associé à l'échantillonneur bloqueur 350 permet de piloter les transistors T323 et T327 formant source de courant à l'aide d'un signal filtré correspondant au niveau mesuré par le capteur Ca.

Plus précisément, si on appelle IL le courant débité par la sortie 302 du circuit 300, VL la tension mesurée aux bornes du bobinage B2, Rj la résistance du capteur Ca, Vj la tension mesurée aux bornes du capteur Ca, K.IL le courant circulant dans la branche 325 et (1-K)IL le courant circulant dans la branche 321, on a :

$$Vj = K.IL.Rj,$$

Vfilt (tension sur la sortie 351 du circuit 350, soit la tension filtrée $V_j$ après stabilisation) = $\alpha$.VL , et par conséquent :

$$IL = (\alpha.VL)/(K.Rj).$$

On comprend ainsi que l'étage de sortie 320 de circuit 300 formé par la combinaison des deux branches 321, 325 délivre un courant IL proportionnel au rapport entre la tension VL mesurée aux bornes de la charge et la résistance de sortie Rj du capteur Ca.

Le multiplexeur 340 a pour fonction d'appliquer sur l'entrée du convertisseur 344 alternativement le signal issu de la sortie 334 du compteur/décompteur 332 ou le signal issu du filtre 335. Plus précisément, aux instants de comptage/décomptage du compteur 332 le multiplexeur 340 applique sur l'entrée du convertisseur 344 la sortie du compteur/décompteur 332. A cet instant, l'échantillonneur bloqueur 350 permet de maintenir sur l'entrée de l'amplificateur opérationnel 360 la tension filtrée issue du filtre 335.

En dehors des instants de comptage/décomptage du compteur 332, le multiplexeur 340 peut appliquer sur l'entrée du convertisseur 344 le signal de sortie du filtre 335.

L'utilisation d'un convertisseur 344 unique permet une compensation automatique des défauts éventuels de celui-ci, par exemple non linéarité ou dérive.

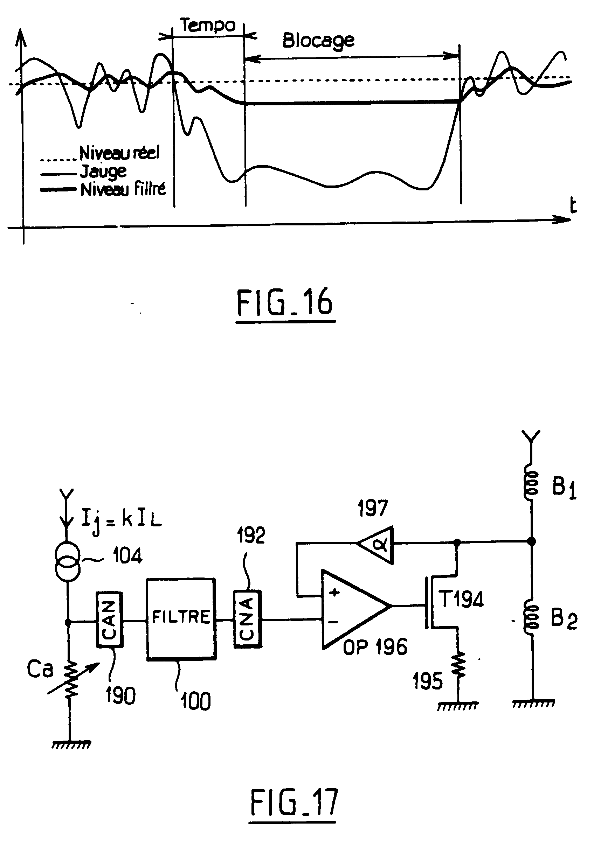

On va maintenant décrire la structure du filtre 400 représenté sur la figure 15, en liaison avec la figure 16.

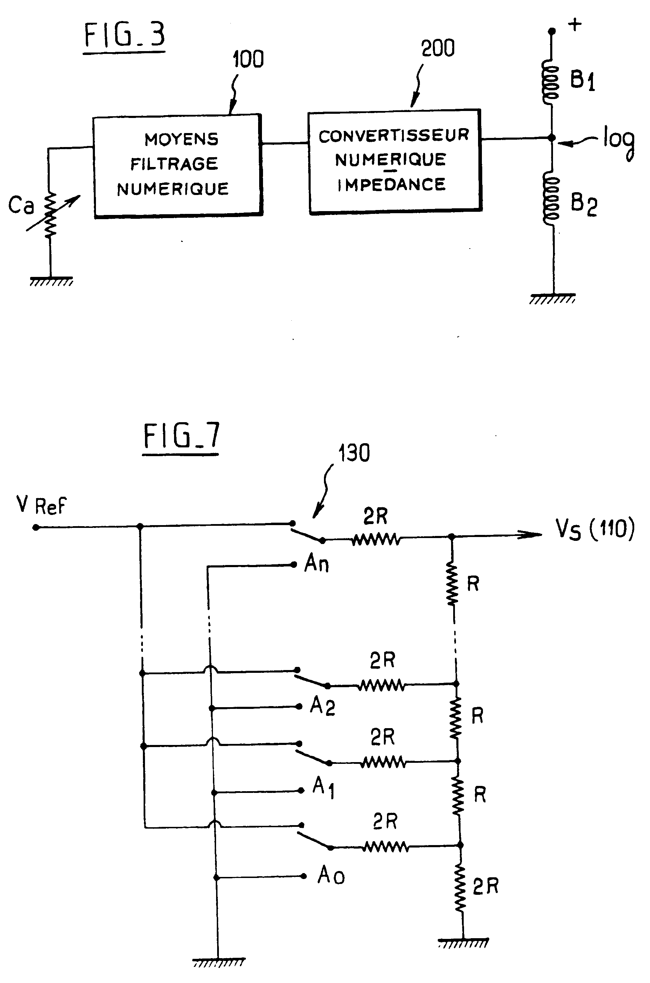

Le filtre 400 représenté sur la figure 15 peut remplacer le filtre numérique représenté sur les figures 3, 4, 11 et 12, ou compléter celui-ci.

En variante le filtre 400 représenté sur la figure 15 peut être utilisé à la place du filtre numérique 335 illustré schématiquement sur la figure 14.

A cette fin, le filtre 400 est associé à un comparateur 330, un compteur 332, un multiplexeur 340, un convertisseur numérique analogique 344 et un échantillonneur bloqueur 350 comparable à ceux de la figure 14.

Le comparateur 330 reçoit sur une première entrée le signal analogique d'entrée Vin. Ce comparateur 330 reçoit sur sa seconde entrée le signal de sortie analogique disponible sur le convertisseur numérique/analogique 344. La sortie 331 du comparateur 330 est reliée à l'entrée de comptage/décomptage du compteur 332. Celui-ci reçoit par ailleurs sur son entrée 333 un signal d'horloge à fréquence constante.

La sortie 334 numérique du compteur 332 est reliée à une première entrée du multiplexeur 340. Comme on l'expliquera par la suite, la sortie numérique 334 du compteur 332 est également reliée à l'entrée du filtre 400. La sortie du multiplexeur 340 est reliée à l'entrée du convertisseur numérique/analogique 344, lequel reçoit sur son entrée 345 un signal de référence. La sortie du convertisseur 344 est reliée en plus de la seconde entrée du comparateur 330, à l'entrée de l'échantillonneur bloqueur 350. Le cas échéant, la sortie de celui-ci peut être reliée à l'entrée d'un amplificateur 352. Le signal analogique filtré est ainsi disponible sur la sortie de l'amplificateur 352 sous la référence Vout sur la figure 15.

Le filtre 400 reçoit sur son entrée 412 le signal numérique d'entrée issue de la sortie 334 du compteur 332 et fournit sur sa sortie 411 reliée à la seconde entrée du multiplexeur 340, un signal correspondant filtré.

Le filtre 400 peut bien entendu faire l'objet de nombreuses variantes de réalisation.

Dans le cadre d'applications à la mesure du niveau d'un liquide dans un réservoir de véhicule automobile, par exemple un réservoir de carburant, un filtre 400 du premier ordre suffit à éliminer correctement les variations périodiques du signal d'entrée (typiquement 0,3 à 1Hz) liées aux mouvements classiques du véhicule.

Cependant, dans des conditions de conduite exceptionnelles, par exemple dans le cas d'un virage, d'une montée ou d'une descente prolongée, le niveau de liquide apparent mesuré par le capteur Ca peut varier de manière importante et erronée et ce pendant plusieurs dizaines de secondes.

Le filtre 400 représenté sur la figure 15 a pour but de rejeter les valeurs erronées ainsi mesurées.

Pour cela, comme on l'a indiqué précédemment, le filtre 400 comprend un ensemble de filtrage 410 associé à des moyens de commande 420, lesquels comprennent :

- des moyens 422 de détection aptes à détecter les croisements entre le signal d'entrée appliqué sur l'entrée 412 et une valeur filtrée de ce signal d'entrée obtenue sur la sortie 411,
- des moyens 424 de temporisation relancés à chaque croisement décelés par les moyens de détection 422, et
- des moyens 426 de blocage du filtre 410 si aucun croisement n'est décelé par les moyens de détection 422 avant la fin de la temporisation et de déblocage de ce filtre 410 lors du premier croisement décelé par les moyens de détection 422 après blocage du filtre 410.

Comme indiqué précédemment, l'ensemble de filtrage 410 peut faire l'objet de nombreuses variantes de réalisation.

Selon le mode de réalisation particulier représenté sur la figure 15, ces moyens 410 sont constitués d'un filtre du premier ordre qui assure la fonction de filtrage suivante :

$$\text{filtre}_n = \text{filtre}_{n-1} + \text{Mniv.} \, (NIV_n - \text{filtre}_{n-1})/P,$$

relation dans laquelle :

filtre$_n$ représente le signal filtré disponible à l'instant n sur la sortie 411 des moyens de filtrage 410,
filtre$_{n-1}$ représente le même signal disponible à l'instant n-1 sur la sortie 411 des moyens de filtrage 410,
Mniv représente un facteur multiplicatif,
$NIV_n$ représente le signal appliqué sur l'entrée 412 des moyens de filtrage 410, c'est-à-dire le signal mesuré disponible à la sortie 334 du compteur 332 et
P représente une constante de temps, par exemple $P = 2^{14}\tau$, $\tau$ étant la période de l'horloge du filtre.

Plus précisément, les moyens de filtrage 410 illustrés sur la figure 15 comprennent :

- un soustracteur 413 qui calcule $NIV_n$ - filtre$_{n-1}$ en retranchant du signal disponible sur la sortie 334 du compteur 332, la valeur du signal disponible sur la sortie d'un registre 417, laquelle sortie correspond également à la sortie 411 des moyens de filtrage 410 appliquée au multiplexeur 340,
- un diviseur 414 qui divise le signal de sortie du soustracteur 413 par la constante de temps P,
- un multiplicateur 415 qui multiplie le signal de sortie du multiplicateur 414 par le facteur multiplicatif Mniv,
- un additionneur 416 qui additionne la valeur filtre$_{n-1}$ prélevée sur la sortie du registre 417 au signal issu du multiplicateur 415, et enfin
- le registre 417 précité.

Celui-ci est cadencé par un signal d'horloge appliqué sur son entrée 418.

La valeur filtrée filtre$_n$ disponible sur la sortie de l'additionneur 416 rafraîchit ainsi périodiquement la valeur mémorisée dans le registre 417 et appliquée au multiplexeur 340.

A chaque détection d'un croisement entre le signal d'entrée $NIV_n$ disponible sur la sortie 334 du compteur 332 et la valeur filtrée de ce signal d'entrée filtre$_{n-1}$ disponible sur la sortie du registre 417, la sortie des moyens de détection 422 initie les moyens de temporisation 424. Pour cela, de préférence les moyens de temporisation 424 sont formés d'un décompteur lequel est chargé à une valeur prédéterminée représentative de la temporisation recherchée, appliqué sur son entrée 425, à chaque croisement décelé par les moyens de détection 422. Le contenu du compteur 424 est alors décrémenté au rythme d'un signal d'horloge appliqué sur l'entrée 423.

La temporisation ainsi définie par le compteur 424 peut être par exemple de 1 à 2 secondes.

Lorsque la sortie 427 du compteur 426 atteint zéro, c'est-à-dire qu'aucun croisement n'est détecté pendant la temporisation, les moyens de blocage 426 sont validés pour intervenir sur les moyens de filtrage 410 afin de bloquer ceux-ci.

En revanche, si un croisement intervient avant la fin de la temporisation, celle-ci est relancée.

Par ailleurs, le filtre 410 est débloqué lorsqu'un croisement est à nouveau détecté par les moyens 422. Le fonctionnement est illustré sur la figure 16.

Les moyens de blocage 426 peuvent agir sur le filtre 410 pour verrouiller celui-ci, c'est-à-dire pour maintenir en sortie de ce filtre 410 la valeur présente au moment du blocage, soit à la fin de la temporisation.

Cependant, selon une première caractéristique additionnelle préférentielle de l'invention, les moyens de blocage 426 sont adaptés non pas pour verrouiller le filtre 410, mais pour modifier la constante de temps de ce dernier, en allongeant cette constante de temps, par exemple dans un rapport 16.

Plus précisément, de préférence, lorsqu'aucun croisement n'est détecté par les moyens 422 pendant la temporisation générée par le compteur 424, les moyens de blocage 426 agissent sur le multiplicateur 415 afin d'allonger la constante de temps du filtrage.

Les évolutions de la valeur filtrée obtenues sur la sortie du registre 417 deviennent alors très faibles sans être totalement nulles.

Pour cela, les moyens 426 peuvent imposer par exemple un coefficient multiplicateur Mniv = 1, pendant la période de blocage du filtre 410. Le filtrage redevient normal au premier croisement détecté par les moyens 422 consécutif à ce blocage. Les moyens 426 réappliquent alors sur le multiplicateur 415 un coefficient multiplicateur Mniv compatible avec une constante de temps plus courte.

A titre d'exemple non limitatif le coefficient multiplicateur Mniv appliqué par les moyens 426 sur le multiplicateur 415 peut être compris, en dehors des périodes de blocage, entre 16 et 32, et défini sur la base d'une relation qui sera précisée par la suite.

A titre d'exemple non limitatif, la constante de temps du filtre 410 en mode normal peut être de l'ordre de 30 secondes et en mode bloqué de l'ordre de 8 minutes.

L'homme de l'art comprendra aisément qu'il est avantageux d'augmenter notablement la constante du filtre dans la période dite de blocage, et non point de verrouiller totalement celui-ci. En effet, cette disposition permet de rallier toujours la valeur réelle du signal d'entrée, même en cas d'erreur temporaire. Par exemple en cas de défaut d'initialisation du système, lié à un démarrage en pente, la valeur mesurée au départ est fausse. Si l'on bloque complètement le filtre 410 lors du premier croisement on risque de ne jamais rallier la valeur réelle une fois le véhicule revenu à une assiette normale. En revanche, ralentir le filtre 410 en augmentant sa constante de temps permet de s'affranchir totalement de cette difficulté.

Selon une seconde caractéristique additionnelle avantageuse de l'invention, il est proposé, au démarrage, c'est-à-dire lors de l'apparition de l'alimentation sur le circuit, d'imposer un mode intermédiaire où le blocage (augmentation de la constante de temps) des moyens de filtrage 410 est interdit tant qu'un nombre de croisements prédéterminés n'a pas été détecté par les moyens 422. Pour cela, les moyens 426 sont inhibés tant que ce nombre de croisements n'est pas atteint.

Cette disposition permet d'éviter que le système ne soit initialisé à une valeur erronée transmise par le capteur Ca liée par exemple à un stationnement en position inclinée du véhicule (tel qu'un stationnement sur trottoir).

En effet, dans un tel cas, le niveau de carburant varie brutalement dès que le véhicule est déplacé. Par conséquent, si l'on passe immédiatement en mode normal, le système détecte une variation apparente importante mais erronée du niveau. Aucun croisement n'est détecté pendant la temporisation. Le système passe alors en mode bloqué. En l'absence du mode intermédiaire imposé de préférence dans le cadre de l'invention, le système mettrait alors un temps très long à rallier la bonne valeur.

Il faut noter que pour le circuit, l'égalité permanente entre la valeur mesurée issue du compteur 332 et la valeur filtrée issue du registre 417, déterminée par les moyens de détection 422, est considérée comme un seul et même croisement.

Selon une troisième caractéristique additionnelle avantageuse de l'invention, le circuit représenté sur la figure 15 comprend un élément non linéaire. Cet élément non linéaire est adapté pour compenser la non linéarité de l'ensemble capteur Ca/charge B1-B2.

En effet, la plupart des ensembles jauge Ca + indicateur logométrique, ne sont pas linéaires.

Si le filtrage est lui linéaire, la réponse du système varie en fonction de la valeur mesurée.

Deux moyens de compensation de cette non linéarité peuvent être envisagés.

Le premier moyen consiste à utiliser un convertisseur analogique/numérique 344 non linéaire, pour obtenir un nombre constant de pas par degré, alors qu'avec un convertisseur linéaire on a un nombre constant de pas par ohm. La courbe de réponse de ce convertisseur 344 doit dans ce cas répondre autant que possible à l'inverse de la courbe capteur Ca/indicateur B1-B2.

Le second moyen de compensation consiste à faire varier la constante de temps du filtre 410 en fonction de la réponse de l'ensemble capteur Ca/indicateur B1-B2. Plus précisément, ce type de correction peut être réalisé à l'aide d'un opérateur de multiplication dans le filtrage obtenu par les moyens 410.

Pour cela, on peut par exemple prévoir un facteur multiplicatif Mniv de la forme :

$$16.(2.NIV_{max} - NIV_n/NIV_{max}),$$

relation dans laquelle $NIV_{max}$ représente l'amplitude maximale du signal disponible sur la sortie 334 du compteur 332.

On va maintenant décrire la variante de réalisation représentée sur la figure 17.

On retrouve sur cette figure le capteur Ca de résistance interne $R_j$ et un indicateur, par exemple logométrique B1-B2.

Le capteur Ca est alimenté par un générateur de courant 104.

La tension analogique $V_j$ prélevée aux bornes du capteur Ca est appliquée à l'entrée d'un convertisseur 190 analogique/numérique. La sortie de celui-ci attaque l'entrée du filtre numérique 100. Celui-ci peut prendre l'une quelconque des formes décrites précédemment. La sortie du filtre numérique 100 est reliée à l'entrée d'un convertisseur numérique/analogique 192.

L'étage de sortie du dispositif comprend un générateur de courant composé d'un transistor T194 en série d'une résistance shunt 195.

La sortie du convertisseur 192 est reliée à la première entrée d'un amplificateur opérationnel OP196. Celui-ci reçoit sur sa seconde entrée la tension de sortie du circuit, soit la tension aux bornes de l'indicateur B1-B2, par l'intermédiaire d'un atténuateur 197 de rapport $\alpha$. En outre, la source de courant 104 est commandée par un circuit sensible au courant de sortie IL du circuit, soit le courant circulant dans le shunt 195 de sorte que la source 104 débite un courant $I_j = K.IL$ .

De façon comparable au circuit de la figure 14 on a :

$$V_j = K.IL.R_j$$

après stabilisation la tension de sortie du convertisseur 192 = $V_j$.

donc $V_j = \alpha\ VL$ et par conséquent :

$$IL = (\alpha.\ VL)/(K.\ R_j).$$

Ainsi là encore le circuit délivre sur la charge un courant de sortie IL proportionnel au rapport entre la tension VL mesurée aux bornes de la charge et la résistance de sortie $R_j$ du capteur Ca.

**Revendications**

1. Circuit de traitement d'un signal, comprenant un module (200) formant convertisseur numérique/impédance qui attaque l'entrée d'une charge associée (Log), ledit convertisseur numérique/impédance (200) présentant une impédance de sortie variable et fonction dudit signal, caractérisé par le fait que ledit signal est un signal de sortie d'un capteur (Ca) analogique résistif dont la résistance de sortie variable est fonction d'une grandeur physique détectée et que le circuit comprend en outre un moyen de filtrage numérique (100) comportant un convertisseur analogique/numérique (180) relié à la sortie du capteur (Ca) et un filtre numérique (185) associé au convertisseur analogique/numérique et dont la sortie est reliée à l'entrée du module (200) formant convertisseur numérique/impédance, de sorte que le convertisseur numérique/impédance présente une impédance qui est équivalente à la résistance de sortie du capteur (Ca).

2. Dispositif selon la revendication 1, caractérisé par le fait que le convertisseur numérique/impédance (200) comprend des moyens (230 ; 274 ; 294 ; 310) de mesure de la tension aux bornes de la charge (B1, B2) et un étage de sortie (240 ; 290 ; 320) du type source de courant commandé pour délivrer un courant proportionnel au rapport entre la tension mesurée aux bornes de la charge (B1, B2) et la résistance de sortie du capteur (Ca).

3. Dispositif selon l'une des revendications 1 ou 2, caractérisé par le fait que le convertisseur numérique/impédance (200) est formé d'un réseau de résistances (210) et d'un convertisseur d'impédance (220).

4. Dispositif selon la revendication 3, caractérisé par le fait que le convertisseur d'impédance (200) comprend un ensemble comportant en série un générateur de courant (240) et une résistance (R245) connecté aux bornes d'entrée de la charge (Log), et des moyens (230, 250 ; 270, 271) de commande du générateur de courant (240).

5. Dispositif selon la revendication 4, caractérisé par le fait que les moyens (230, 250 ; 270, 271) de commande du générateur de courant (240) comprennent un réseau de résistances (210 ; 272) piloté par le moyen de filtrage numérique (100).

6. Dispositif selon l'une des revendications 4 ou 5, caractérisé par le fait que les moyens (230, 250 ; 270, 271) de commande du générateur de courant (240) sont sensibles à la tension présente aux bornes d'entrée de la charge (Log).

7. Dispositif selon l'une des revendications 3 à 6, caractérisé par le fait que le convertisseur d'impédance (220) comprend une résistance shunt (R226) connectée en série de la sortie du réseau de résistances (210), un premier étage de recopie de potentiel (230) apte à recopier aux bornes de la sortie du réseau de résistances (210) la tension présente à l'entrée de la charge, un générateur de courant (240) relié en série d'une résistance (R245) formant un ensemble connecté aux bornes de l'entrée de la charge (Log) et un second étage de recopie de potentiel (250) apte à recopier la tension aux bornes de la résistance shunt (R226) sur la résistance (R245) connectée en série de la source de courant (240).

8. Dispositif selon la revendication 7, caractérisé par le fait que la résistance (R245) connectée en série du générateur de courant (240) est plus faible que la résistance shunt (R226), typiquement égale au 1000ème de la résistance shunt (R226).

9. Dispositif selon l'une des revendications 7 ou 8, caractérisé par le fait que le réseau de résistances (210) comprend un ensemble d'interrupteurs (S0 à Sn) connectés en série, pilotés respectivement par des bits différents du signal de sortie du moyen de filtrage numérique (100) et reliés respectivement en parallèle d'une résistance associée.

10. Dispositif selon la revendication 9, caractérisé par le fait que les résistances ont des valeurs croissantes progressivement selon la loi $2^n R$.

11. Dispositif selon l'une des revendications 2 à 6, caractérisé par le fait que les moyens de commande (270, 271) du générateur de courant (240) comprennent un amplificateur à gain variable (270) relié à une entrée d'un comparateur (274) dont la seconde entrée est reliée à l'entrée de la charge (Log) et dont la sortie est reliée au générateur de courant (240).

12. Dispositif selon la revendication 11, caractérisé par le fait que l'amplificateur à gain variable (270) comprend un atténuateur (272) formé d'un réseau de résistances piloté par la sortie du moyen de filtrage numérique.

13. Dispositif selon la revendication 12, caractérisé par le fait que l'amplificateur à gain variable (270) comprend un premier étage amplificateur (271), un atténuateur (272) formé d'un réseau de résistances, et un second étage amplificateur (273).

14. Dispositif selon l'une des revendications 1 ou 2, caractérisé par le fait que le convertisseur numérique/impédance (200) comprend un convertisseur numérique/analogique (280) et un convertisseur analogique/impédance (285).

15. Dispositif selon l'une des revendications 1 ou 2, caractérisé par le fait que le moyen de commande (292) de la source de courant comprend des moyens de calcul numériques.

16. Dispositif selon la revendication 15, caractérisé par le fait que les moyens de calcul numériques (292) ont une entrée reliée à l'entrée de la charge par l'intermédiaire d'un convertisseur analogique/numérique (294) et leur sortie reliée à l'entrée de commande de la source de courant (290) par l'intermédiaire d'un convertisseur numérique/analogique (295).

17. Dispositif selon l'une des revendications 1 ou 2, caractérisé par le fait que le moyen de commande (292) de la source de courant comprend des moyens de calcul analogique.

18. Dispositif selon la revendication 17, caractérisé par le fait que le moyen de commande (292) reçoit une information analogique représentative de la résistance en sortie d'un réseau de résistances (130) commandé par le moyen de filtrage numérique (100).

19. Dispositif selon l'une des revendications 2 à 18, caractérisé par le fait que les moyens (310) de mesure de la tension aux bornes de la charge (B1,B2) comprennent un pont diviseur résistif (R312 ; R314).

20. Dispositif selon l'une des revendications 2 à 19, caractérisé par le fait que l'étage de sortie du type source de courant (320) comprend un transistor (T327) connecté en série du capteur (Ca).

21. Dispositif selon l'une des revendications 2 à 20, caractérisé par le fait que l'étape de sortie du type source de courant (320) comprend deux branches (321, 325) comprenant chacune un transistor (T323, T327) connectées en parallèle.

**22.** Dispositif selon la revendication 21, caractérisé par le fait qu'une première branche (321) comprend une résistance (R322) connectée en série d'un transistor (T323), et la deuxième branche (325) comprend une résistance (R326) connectée en série d'un transistor (T327) et du capteur (Ca).

**23.** Dispositif selon l'une des revendications 21 ou 22, caractérisé par le fait que l'un des transistors (T323) est piloté par un amplificateur opérationnel (360) qui reçoit respectivement sur ses entrées le signal de tension mesurée aux bornes de la charge et le signal de sortie du filtre.

**24.** Dispositif selon la revendication 23, caractérisé par le fait que le second transistor (T327) est piloté par un amplificateur opérationnel (370) qui reçoit respectivement sur ses entrées le potentiel présent sur un point intermédiaire des deux branches (321, 325).

**25.** Dispositif selon l'une des revendications 1 à 24, caractérisé par le fait que les moyens de filtrage numériques (100) comprennent un étage comparateur (110) qui reçoit sur une première de ses entrées, le signal de sortie du capteur (Ca), un compteur/décompteur (120) recevant sur une entrée un signal d'horloge à fréquence constante, et sur son entrée de commande de comptage/décomptage la sortie de l'étage comparateur (110), et un réseau de résistances (130) relié entre la sortie du compteur/décompteur (120) et la seconde entrée de l'étage comparateur (110).

**26.** Dispositif selon l'une des revendications 12, 13 ou 25, caractérisé par le fait que le réseau de résistances (130) comprend un pont diviseur comportant plusieurs résistances de valeur égale R connectées en série par l'intermédiaire d'une résistance de valeur 2R entre la masse et la sortie du réseau, chaque point commun à deux résistances adjacentes de ce pont diviseur, ainsi que le point de sortie de celui-ci étant par ailleurs relié par l'intermédiaire d'une résistance de valeur 2R à un inverseur (A0 à An), chaque inverseur étant commandé respectivement par une sortie des moyens de filtrage numérique (100) de sorte que chaque inverseur relie alternativement la résistance correspondante (2R) soit à la masse, soit à une tension de référence.

**27.** Dispositif selon l'une des revendications 12, 13 ou 25, caractérisé par le fait que le réseau de résistances (130) comprend un pont diviseur comportant plusieurs résistances de valeur égale R connectées en série par l'intermédiaire d'une résistance de valeur 2R entre la masse et une tension de référence, chaque point commun à deux résistances adjacentes de ce pont diviseur ainsi que son extrémité recevant la tension de référence étant par ailleurs relié par l'intermédiaire d'une résistance de valeur 2R à un inverseur, les inverseurs (A0 à An) étant pilotés par une sortie associée des moyens de filtrage numériques (100) de sorte que chaque inverseur relie alternativement la résistance (2R) correspondante, soit à la masse, soit à l'entrée d'un étage amplificateur (132).

**28.** Dispositif selon l'une des revendications 3 à 27, caractérisé par le fait que le réseau de résistances (130, 210) est piloté par des bits de poids fort de la sortie du moyen de filtrage numérique (100).

**29.** Dispositif selon la revendication 25, caractérisé par le fait qu'il comprend des moyens aptes à modifier la fréquence du signal d'horloge à la mise sous tension.

**30.** Dispositif selon la revendication 29, caractérisé par le fait que les moyens générant le signal d'horloge comprennent un oscillateur (142) et un diviseur (140) monté en cascade et par le fait que les moyens aptes à modifier la fréquence du signal d'horloge comprennent des moyens aptes à inhiber le diviseur (140) à la mise sous tension.

**31.** Dispositif selon la revendication 30, caractérisé par le fait que les moyens d'inhibition (160) sont reliés à la sortie de l'étage comparateur (110) pour interrompre une inhibition du diviseur (140) après détection d'un nombre prédéterminé de passages à zéro de la sortie de l'étage comparateur (110).

**32.** Dispositif selon l'une des revendications 1 à 24, caractérisé par le fait que les moyens de filtrage numérique (100) comprennent en série un convertisseur analogique/numérique (180) et un filtre numérique (185).

**33.** Dispositif selon l'une des revendications 1 à 24, caractérisé par le fait que les moyens de filtrage numérique (100) comprennent un étage comparateur (330) qui reçoit sur une première de ses entrées, le signal de sortie du capteur (Ca), un compteur/décompteur (332) recevant sur une entrée (333) un signal d'horloge à fréquence constante et sur son entrée de commande de comptage/décomptage la sortie de l'étage comparateur (330), un filtre numérique (335) dont l'entrée est reliée à la sortie du compteur/décompteur (332) et un convertisseur analogique/numérique (344) relié entre la sortie du filtre numérique (335) et la seconde entrée du comparateur (330).

**34.** Dispositif selon l'une des revendications 23 à 33 prises en combinaison, caractérisé par le fait qu'un circuit échantillonneur/bloquer (350) est intercalé entre la sortie du convertisseur analogique/numérique (344) et l'une des entrées du comparateur (360).

**35.** Dispositif selon l'une des revendications 1 à 34, caractérisé par le fait que les moyens de filtrage comprennent des moyens de commande (420) comportant :

- des moyens (422) de détection aptes à détecter les croisements entre le signal d'entrée et une valeur filtrée de ce signal d'entrée,
- des moyens (424) de temporisation relancés à chaque croisement décelé par les moyens de détection (422), et
- des moyens (426) de blocage du filtre (410) si aucun croisement n'est décelé par les moyens de détection (422) avant la fin de la temporisation et de déblocage du filtre (410) lors du premier croisement décelé par les moyens de détection (422) après blocage du filtre.

**36.** Dispositif selon la revendication 35, caractérisé par le fait que le moyen de filtrage numérique (410) est un filtre du premier ordre.

**37.** Dispositif selon l'une des revendications 35 ou 36, caractérisé par le fait que le moyen de filtrage numérique (410) est de la forme :

$$\text{Filtre}_n = \text{Filtre}_{n-1} + \text{Mniv} (\text{NIV}_n - \text{Filtre}_{n-1})/P$$

relation dans laquelle :

$\text{Filtre}_n$ désigne la valeur du signal filtré à l'instant n,
$\text{Filtre}_{n-1}$ désigne la valeur du signal filtré à l'instant n-1,
Mniv désigne un facteur de multiplication
$\text{NIV}_n$ désigne la valeur d'entrée mesurée à l'instant n, et
P désigne la constante de temps.

**38.** Dispositif selon l'une des revendications 35 à 37, caractérisé par le fait que la temporisation est de l'ordre de 1 à 2 secondes.

**39.** Dispositif selon l'une des revendications 35 à 38, caractérisé par le fait que les moyens de blocage (426) comprennent des moyens aptes à modifier la constante de temps du filtre (410).

**40.** Dispositif selon la revendication 39, caractérisé par le fait que les moyens aptes à modifier la constante de temps du filtre (410) sont adaptés pour modifier un facteur multiplicateur (Mniv) de la fonction de filtrage afin d'allonger la constante de temps du filtrage pendant la période de blocage.

**41.** Dispositif selon l'une des revendications 35 à 40, caractérisé par le fait que le moyen de filtrage comprend des moyens aptes à inhiber les moyens de blocage (426), après mise en service, tant que les moyens de détection (422) n'ont pas décelé un nombre prédéterminé de croisements entre le signal d'entrée et la valeur filtrée de ce signal d'entrée.

**42.** Dispositif selon l'une des revendications 35 à 41, caractérisé par le fait qu'il comprend un moyen non linéaire apte à compenser la non-linéarité de l'ensemble capteur (Ca)/charge (B1, B2).

**43.** Dispositif selon la revendication 42, caractérisé par le fait qu'il comprend un convertisseur analogique/numérique (344) non linéaire.

**44.** Dispositif selon la revendication 42, caractérisé par le fait qu'il comprend des moyens aptes à modifier la constante de temps du filtre en fonction de la réponse non linéaire de l'ensemble capteur (Ca)/charge (B1, B2).

**45.** Dispositif selon la revendication 44, caractérisé par le fait que les moyens de modification de la constante de temps du filtre agissent sur un facteur multiplicatif de la fonction de filtrage.

**46.** Dispositif selon la revendication 45, caractérisé par le fait que le facteur multiplicatif Mniv de la fonction de filtrage est de la forme :

$$\text{Mniv} = 16\,(2 - (NIV_{max} - NIV_n)/NIV_{max}).$$

**47.** Dispositif selon l'une des revendications 1 à 46, caractérisé par le fait que le moyen de filtrage numérique (100) et le module (200) formant convertisseur numérique/impédance sont réalisés sous forme d'un circuit intégré unique.

**48.** Dispositif selon l'une des revendications 1 à 47, caractérisé par le fait qu'il est placé sur le capteur (Ca).

**49.** Dispositif selon l'une des revendications 1 à 47, caractérisé par le fait qu'il est placé sur la charge (Log).

**50.** Dispositif selon l'une des revendications 1 à 49, caractérisé par le fait que le capteur (Ca) est un capteur résistif, notamment pour la mesure d'un niveau d'un liquide.

**51.** Dispositif selon l'une des revendications 1 à 50, caractérisé par le fait que le capteur (Ca) est un capteur de type potentiométrique, alimenté par une tension régulée et dont l'information de sortie est prélevée sur le curseur du potentiomètre.

**52.** Dispositif selon l'une des revendications 1 à 50, caractérisé par le fait que le capteur (Ca) est de type rhéostatique, alimenté par une source de courant et dont l'information de sortie est prélevée aux bornes de la résistance variable ainsi formée.

**53.** Dispositif selon l'une des revendications 1 à 52, caractérisé par le fait que le courant circulant dans le capteur (Ca) est inférieur au courant circulant dans la charge (Log).

**54.** Dispositif selon l'une des revendications 1 à 52, caractérisé par le fait que le capteur (Ca) est alimenté par un courant alternatif et qu'il est prévu un circuit de redressement entre la sortie du capteur et l'entrée du moyen de filtrage numérique (100).

**55.** Dispositif selon l'une des revendications 1 à 54, caractérisé par le fait que la charge (Log) est formée d'un indicateur, de préférence un indicateur logométrique.

**56.** Dispositif selon l'une des revendications 1 à 55, caractérisé par le fait qu'il comprend :

- un comparateur (330) qui reçoit sur une première entrée, la tension aux bornes du capteur (Ca),
- un compteur/ décompteur (332) dont l'entrée de comptage/décomptage est reliée à la sortie du comparateur (330),
- un filtre numérique (335) dont l'entrée est reliée à la sortie du compteur/ décompteur (332),
- un multiplexeur (340) qui reçoit sur ses entrées respectivement la sortie du compteur/décompteur (332) et la sortie du filtre numérique (335),
- un convertisseur numérique/analogique (344) dont l'entrée est reliée à la sortie du multiplexeur (340) et dont la sortie est reliée à la seconde entrée du compteur/décompteur (332),
- un échantillonneur/bloqueur (350) dont l'entrée est reliée à la sortie du convertisseur numérique/analogique (344), et
- un circuit de commande (360, 321, 325) qui pilote une source de courant (T323, T327) en sortie du dispositif sur la base de la tension mesurée aux bornes de la charge et du signal issu de l'échantillonneur/bloqueur (350).

**57.** Dispositif selon l'une des revendications 1 à 56, caractérisé par le fait qu'il comprend une source de courant (T327, 104) qui alimente le capteur (Ca), laquelle source de courant (T327, 104) est commandée pour débiter un courant $(I_j)$ proportionel au courant de sortie (IL) appliqué à la charge.

**58.** Dispositif selon l'une des revendication 1 à 57, caractérisé par le fait qu'il comprend :

- un convertisseur analogique/numérique (190) dont l'entrée est reliée à la sortie du capteur (Ca),
- un filtre numérique (100) dont l'entrée est reliée à la sortie du convertisseur analogique/numérique (190),
- un convertisseur numérique/analogique (192) dont l'entrée est reliée à la sortie du filtre numérique (100),

- un atténuateur (197) dont l'entrée est reliée à la charge,
- un source de courant en sortie (T194) qui est pilotée par la différence entre le signal issu du convertisseur numérique/analogique (192) et le signal issu de l'atténuateur (197),

59. Application du circuit conforme à l'une des revendications 1 à 58 au traitement du signal de sortie d'un capteur résistif sur véhicule automobile.

**Claims**

1. A circuit for processing a signal, the circuit comprising a module (200) forming a digital-to-impedance converter which seeds the input of an associated load (Log), said digital-to-impedance converter (200) presenting an output impedance that is variable as a function of said signal, the circuit being characterized by the facts that said signal is an output signal from a resistive analog sensor (Ca) having output resistance that is variable as a function of a detected physical magnitude, and that the circuit further comprises a digital filter means (100) including an analog-to-digital converter (180) connected to the output of the sensor (Ca) and a digital filter (185) associated to the analog-to-digital converter and having its output connected to the input of the module (200) forming a digital-to-impedance converter, such that the digital-to-impedance converter presents an impedance that is equivalent to the output resistance of the sensor (Ca).

2. A circuit according to claim 1, characterized by the fact that the digital-to-impedance converter (200) comprises means (230; 274; 294; 310) for measuring the voltage at the terminals of the load (B1, B2) and an output stage (240; 290; 320) of the controlled current source type for delivering a current that is proportional to the ratio between the voltage measured at the terminals of the load (B1, B2) and the output resistance of the sensor (Ca).

3. A circuit according to claim 1 or 2, characterized in that the digital-to-impedance converter (200) is constituted by a resistor array (210) and by an impedance converter (220).

4. A circuit according to claim 3, characterized by the fact that the impedance converter (200) comprises a unit comprising in series a current generator (240) and a resistor (R245) connected to the input terminal of the load (Log), and means (230, 250; 270, 271) for controlling the current generator (240).

5. A circuit according to claim 4, characterized by the fact that the means (230, 250; 270, 271) for controlling the current generator (240) comprise a resistor array (210; 272) driven by the digital filter means (100).

6. A circuit according to claim 4 or 5, characterized by the fact that the means (230, 250; 270, 271) for controlling the current generator (240) are responsive to the voltage present at the input terminals of the load (Log).

7. A circuit according to any one of claims 3 to 6, characterized by the fact that the impedance converter (220) comprises a shunt resistor (R226) connected in series with the output of the resistor array (210), a first voltage-copying stage (230) suitable for copying the voltage that is present at the input of the load onto the output terminals of the resistor array (210), a current generator (240) connected in series with a resistor (R245) forming a unit connected to the input terminals of the load (Log), and a second voltage-copying stage (250) suitable for copying the voltage present at the terminals of the shunt resistor (R226) onto the resistor (R245) that is connected in series with the current source (240).

8. A circuit according to claim 7, characterized by the fact that the resistor (R245) connected in series with the current generator (240) is of smaller resistance than the shunt resistor (R226), typically being equal to one-thousandth of the resistance of the shunt (R226).

9. A circuit according to claim 7 or 8, characterized by the fact that the resistor array (210) comprises a set of switches (S0 to Sn) connected in series, driven by respective different bits of the output signal of the digital filter means (100) and connected in parallel with respective associated resistors.

10. A circuit according to claim 9, characterized by the fact that the resistors are of resistances that increase progressively in application of the relationship $2^n R$.

11. A circuit according to any one of claims 2 to 6, characterized by the fact that the control means (270, 271) of the current source (240) comprise a variable gain amplifier (270) connected to one input of a comparator (274) whose other input is connected to the input of the load (Log) and whose output is connected to the current source (240).

12. A circuit according to claim 11, characterized by the fact that the variable gain amplifier (270) comprises an attenuator (272) constituted by a resistor array driven by the output of the digital filter means.

13. A circuit according to claim 12, characterized by the fact that the variable gain amplifier (270) comprises a first amplifier stage (271), an attenuator (272) constituted by a resistor array, and a second amplifier stage (273).

14. A circuit according to claim 1 or 2, characterized by the fact that the digital-to-impedance converter (200) comprises a digital-to-analog converter (280) and an analog to impedance converter (285).

15. A circuit according to claim 1 or 2, characterized by the fact that the control means (292) for the current source comprise digital calculation means.

16. A circuit according to claim 15, characterized by the fact that the digital calculation means (292) have one input connected to the input of the load via an analog-to-digital converter (294) and their output connected to the control input of the current source (290) via a digital-to-analog converter (295).

17. A circuit according to claim 1 or 2, characterized by the fact that the control means (292) of the current source comprise analog calculation means.

18. A circuit according to claim 17, characterized by the fact that the control means (292) receives analog data representative of the output resistance of a resistor array (130) under the control of the digital filter means (100).

19. A circuit according to any one of claims 2 to 18, characterized by the fact that the means (310) for measuring the voltage at the terminals of the load (B1, B2) include a resistive divider bridge (R312; R314).

20. A circuit according to any one of claims 2 to 19, characterized by the fact that the current source type output stage (320) comprises a transistor (T327) connected in series with the sensor (Ca).

21. A circuit according to any one of claims 2 to 20, characterized by the fact that the current source type output stage (320) comprises two parallel-connected branches (321, 325) each including a transistor (T323, T327).

22. A circuit according to claim 21, characterized by the fact that a first branch (321) comprises a resistor (R322) connected in series with a transistor (T323), and the second branch (325) comprises a resistor (R326) connected in series with a transistor (T327) and with the sensor (Ca).

23. A circuit according to claim 21 or 22, characterized by the fact that one of the transistors (T323) is driven by an operational amplifier (360) that receives on respective inputs both the voltage signal as measured at the terminals of the load and the output signal from the filter.

24. A circuit according to claim 23, characterized by the fact that the second transistor (T327) is driven by an operational amplifier (370) that receives on respective inputs the potentials present at respective intermediate points of the two branches (321, 325).

25. A circuit according to any one of claims 1 to 24, characterized by the fact that the digital filter means (100) comprise a comparator stage (110) having a first input receiving the output signal from the sensor (Ca), an up/down counter (120) having an input that receives a clock signal at a constant frequency, and having an up/down control input that receives the output from the comparator stage (110), and a resistor array (130) connected between the output of the up/down counter (120) and a second input of the comparator stage (110).

26. A circuit according to any one of claims 12, 13, or 25, characterized by the fact that the resistor array (130) comprises a divider bridge having a plurality of resistors of resistance R connected in series via a resistor of resistance 2R between ground and the output of the array, each common point between two adjacent resistors of said divider bridge, and the output point thereof also being connected via respective resistors of resistance 2R to respective switches (A0 to An), each switch being respectively controlled by one of the outputs of the digital filter means (100) in such a manner that each switch connects the corresponding resistor (2R) either to ground, or to a reference voltage.

**27.** A circuit according to any one of claims 12, 13, or 25, characterized by the fact that the resistor array (130) comprises a divider bridge comprising a plurality of resistors of resistance R connected in series via a resistor of resistance 2R between ground and a reference voltage, each point common to two adjacent resistors in said divider bridge and its end point receiving the reference voltage also being connected via a respective resistor of resistance 2R to a respective switch, the switches (A0 to An) being driven by respective associated outputs of the digital filter means (100) in such a manner that each switch connects the corresponding resistor (2R) either to ground or to the input of an amplifier stage (132).

**28.** A circuit according to any one of claims 3 to 27, characterized by the fact that the resistor array (130, 210) is driven by the more significant output bits from the digital filter means (100).

**29.** A circuit according to claim 25, characterized by the fact that it includes means suitable for modifying the frequency of the clock signal when switched on.

**30.** A circuit according to claim 29, characterized by the fact that the means generating the clock signal comprise an oscillator (142) and a divider (140) connected in cascade, and by the fact that the means for modifying the frequency of the clock signal comprise means suitable for inhibiting the divider (140) at switch on.

**31.** A circuit according to claim 30, characterized by the fact that the inhibition means (160) are connected to the output of the comparator stage (110) to interrupt inhibition of the divider (140) after a predetermined number of zero crossings have been detected in the output of the comparator stage (110).

**32.** A circuit according to any one of claims 1 to 24, characterized by the fact that the digital filter means (100) comprise a series connection of an analog-to-digital converter (180) and a digital filter (185).

**33.** A circuit according to any one of claims 1 to 24, characterized by the fact that the digital filter means (100) comprise a comparator stage (330) having a first input receiving the output signal from the sensor (Ca), an up/down counter (332) having an input (333) that receives a clock signal at constant frequency, and having an up/down control input that receives the output from the comparator stage (330), a digital filter (335) whose input is connected to the output of the up/down counter (332), and an analog-to-digital converter (344) connected between the output of the digital filter (335) and a second input of the comparator (330).

**34.** A circuit according to any one of claims 23 to 33 taken in combination, characterized by the fact that a sample-and-hold circuit (350) is interposed between the output of the analog-to-digital converter (344) and one of the inputs of the operational amplifier (360).

**35.** A circuit according to any one of claims 1 to 34, characterized by the fact that the filter means comprise control means (420) including:

detection means (422) suitable for detecting crossovers between the input signal and a filtered value of said input signal;
timing means (424) restarted on each crossover detected by the detection means (422); and
inhibit means (426) for inhibiting the filter (410) if no crossover is detected by the detection means (422) before the timing means have timed out, and for enabling the filter (410) on the first crossover that is detected by the detection means (422) after the filter has been inhibited.

**36.** A circuit according to claim 35, characterized by the fact that the digital filter means (410) comprises a first order filter.

**37.** A circuit according to claim 35 or 36, characterized by the fact that the digital filter means (410) is of the form:

$$\text{filter}_n = \text{filter}_{n-1} + \text{Mniv} (\text{NIV}_n - \text{filter}_{n-1})/P$$

where:

$\text{filter}_n$ designates the value of the filter signal at instant $\underline{n}$;
$\text{filter}_{n-1}$ designates the value of the filter signal at instant n-1;
Mniv designates a multiplicative factor;

**20**

$NIV_n$ designates the input value measured at instant n; and

P designates a time constant.

38. A circuit according to any one of claims 35 to 37, characterized by the fact that its timeout is of the order of 1 second to 2 seconds.

39. A circuit according to any one of claims 35 to 38, characterized by the fact that the inhibit means (426) comprise means suitable for changing the time constant of the filter (410).

40. A circuit according to claim 39, characterized by the fact that the means suitable for modifying the time constant of the filter (410) are adapted to modify a multiplicative factor (Mniv) of the filter function so as to length the filter time constant during the inhibit period.

41. A circuit according to any one of claims 35 to 40, characterized by the fact that the filter means comprise means suitable for preventing the inhibit means (426) from operating when the circuit is switched on until the detection means (422) have detected a predetermined number of crossovers between the input signal and the filtered value of said input signal.

42. A circuit according to any one of claims 35 to 41, characterized by the fact that it includes non-linear means suitable for compensating the non-linearity of the combination of sensor (Ca) and the load (B1, B2).

43. A circuit according to claim 42, characterized by the fact that it includes an analog-to-digital converter (344) that is non-linear.

44. A circuit according to claim 42, characterized by the fact that it includes means suitable for modifying the time constant of the filter as a function of the non-linear response of the combination comprising the sensor (Ca) and the load (B1, B2).

45. A circuit according to claim 44, characterized by the fact that the means for modifying the time constant of the filter act on a multiplicative factor in the filter function.

46. A circuit according to claim 45, characterized by the fact that ,the multiplicative factor Mniv in the filter function is of the form:

$$Mniv = 16(2 - (NIV_{max} - NIV_n)/NIV_{max}).$$

47. A circuit according to any one of claims 1 to 46, characterized by the fact that the digital filter means (100) and the module (200) constituting the digital-to-impedance converter are implemented in the form of a single integrated circuit.

48. A circuit according to any one of claims 1 to 47, characterized by the fact that it is located in the sensor (Ca).

49. A circuit according to any one of claims 1 to 47, characterized by the fact that it is located in the load (Log).

50. A circuit according to any one of claims 1 to 49, characterized by the fact that the sensor (Ca) is a resistive sensor, in particular for measuring the level of a liquid.

51. A circuit according to any one of claims 1 to 50, characterized by the fact that the sensor (Ca) is a potentiometer type sensor, fed with a regulated voltage from which output data is taken by means of the wiper of the potentiometer.

52. A circuit according to any one of claims 1 to 50, characterized by the fact that the sensor (Ca) is of the rheostat type, fed by a current source, and form which output data is taken from the terminals of the variable resistance constituted in this way.

53. A circuit according to any one of claims 1 to 52, characterized by the fact that the current flowing through the sensor (Ca) is less than the current flowing through the load (Log).

**54.** A circuit according to any one claims 1 to 52, characterized by the fact that the sensor (Ca) is fed with alternating current and a rectifier circuit is provided between the output from the sensor and the input to the digital filter means (100).

**55.** A circuit according to any one of claims 1 to 54, characterized by the fact that the load (Log) is constituted by a meter, preferably by a ratio meter.

**56.** A circuit according to any one of claims 1 to 55, characterized by the fact that it comprises:

a comparator (330) having a first input on which it receives the voltage at the terminals of the sensor (Ca);
an up/down counter (332) having an up/down control input connected to the output of the comparator (330);
a digital filter (335) whose input is connected to the output of the up/down counter (332);
a multiplexer (340) whose inputs are connected respectively to the output of the up/down counter (332) and to the output of the digital filter (335);
a digital-to-analog converter (344) whose input is connected to the output of the multiplexer (340) and whose output is connected to the second input of the up/down counter (332);
a sample-and-hold circuit (350) whose input is connected to the output of the digital-to-analog converter (344); and
a control circuit (360, 321, 325) that controls a current source (T323, T327) at the output of the circuit as a whole on the basis of the voltage measured at the terminals of the load and of the signal from the sample-and-hold circuit (350).

**57.** A circuit according to any one of claims 1 to 56, characterized by the fact that it comprises a current source (T327, 104) that feeds the sensor (Ca), which current source (T327, 104) is controlled to deliver a current (Ij) proportional to the output current (IL) supplied to the load.

**58.** A circuit according to any one of claims 1 to 57, characterized by the fact that it comprises:

an analog-to-digital converter (190) whose input is connected to the output of the sensor (Ca);
a digital filter (100) whose input is connected to the output of the analog-to-digital converter (190);
a digital-to-analog converter (192) whose input is connected to the output of the digital filter (100);
an attenuator (197) whose input is connected to the load; and
an output current source (T194) which is driven by the difference between the signal from the digital-to-analog converter (192) and the signal from the attenuator (197).

**59.** An application of the circuit according to any one of claims 1 to 58, to processing the output signal from a resistive sensor in a motor vehicle.

**Patentansprüche**

**1.** Schaltung zur Verarbeitung eines Signales, welche ein Modul (200) umfaßt, das einen Digital-Impedanz-Wandler bildet, der den Eingang einer zugeordneten Last (Log) speist, wobei der Digital-Impedanz-Wandler (200) eine variable, von dem Signal abhängende Ausgangsimpedanz darstellt, dadurch gekennzeichnet, daß das Signal ein Ausgangssignal eines analogen Widerstandssensors (Ca) ist, dessen variabler Ausgangswiderstand eine Funktion einer erfaßten physikalischen Größe ist, und daß die Schaltung außerdem ein Digitalfiltermittel (100) umfaßt, das einen an den Ausgang des Sensors (Ca) angeschlossenen Analog-Digital-Wandler (180) und einen dem Analog-Digital-Wandler (180) zugehörigen Digitalfilter (185) aufweist, dessen Ausgang an den Eingang des den Digital-Impedanz-Wandler bildenden Moduls (200) angeschlossen ist, so daß der Digital-Impedanz-Wandler eine Impedanz darstellt, welche dem Ausgangswiderstand des Sensors (Ca) entspricht.

**2.** Vorrichtung nach Anspruch 1, dadurch gekennzeichnet, daß der Digital-Impedanz-Wandler (200) Mittel (230; 274; 294; 310) zum Messen der Klemmenspannung der Last (B1, B2) und eine Endstufe (240; 290; 320) vom Typ einer Stromquelle aufweist, die so gesteuert wird, daß sie einen Strom liefert, der zu dem Verhältnis zwischen der an den Klemmen der Last (B1, B2) gemessenen Spannung und dem Ausgangswiderstand des Sensors (Ca) proportional ist.

**3.** Vorrichtung nach einem der Ansprüche 1 oder 2, dadurch gekennzeichnet, daß der Digital-Impedanz-Wandler (200) aus einem Widerstandsnetzwerk (210) und einem Impedanzwandler (220) aufgebaut ist.

**4.** Vorrichtung nach Anspruch 3, dadurch gekennzeichnet, daß der Digital-Impedanz-Wandler (200) eine Gruppe aufweist, die in Reihe einen Stromerzeuger (240) und einen Widerstand (R245) umfaßt und mit den Einführungsklemmen der Last (Log) verbunden ist, sowie Mittel (230, 250; 270, 271) zum Steuern des Stromerzeugers (240).

**5.** Vorrichtung nach Anspruch 4, dadurch **gekennzeichnet,** daß die Mittel (230, 250; 270, 271) zum Steuern des Stromerzeugers (240) ein Widerstandsnetzwerk (210; 272) umfassen, das von dem digitalen Filtermittel (100) fremdgesteuert wird.

**6.** Vorrichtung nach einem der Ansprüche 4 oder 5, dadurch **gekennzeichnet,** daß die Mittel (230, 250; 270, 271) zum Steuern des Stromerzeugers (240) auf die an den Einführungsklemmen der Last (Log) anliegende Spannung reagieren.

**7.** Vorrichtung nach einem der Ansprüche 3 bis 6, dadurch **gekennzeichnet,** daß der Impedanzwandler (220) einen in Reihe an den Ausgang des Widerstandsnetzwerks (210) angeschlossenen Nebenwiderstand (R226), eine erste Potentialkopierstufe (230), die dafür geeignet ist, die am Eingang der Last vorhandene Spannung an die Ausgangsklemmen des Widerstandsnetzwerks (210) zu kopieren, einen Stromerzeuger (240), der in Reihe mit einem Widerstand (R245) verbunden ist und so eine Gruppe bildet, die an die Einführungsklemmen der Last (Log) angeschlossen ist, und eine zweite Potentialkopierstufe (250) aufweist, die dafür geeignet ist, die Klemmenspannung des Nebenwiderstands (R226) auf den in Reihe mit der Stromquelle (240) verbundenen Widerstand (R245) zu kopieren.

**8.** Vorrichtung nach Anspruch 7, dadurch **gekennzeichnet,** daß der in Reihe mit dem Stromerzeuger (240) verbundene Widerstand (R245) schwächer als der Nebenwiderstand (R226) ist und typischerweise dem Tausendstel des Nebenwiderstands (R226) entspricht.

**9.** Vorrichtung nach einem der Ansprüche 7 oder 8, dadurch **gekennzeichnet,** daß das Widerstandsnetzwerk (210) eine Gruppe von in Reihe geschalteten Schaltern (S0 bis Sn) aufweist, die jeweils durch verschiedene Bits des Ausgangssignales des digitalen Filtermittels (100) fremdgesteuert werden und jeweils parallel mit einem zugeordneten Widerstand verbunden sind.

**10.** Vorrichtung nach Anspruch 9, dadurch **gekennzeichnet,** daß die Widerstände Werte haben, die schrittweise gemäß dem Gesetz 2n · R ansteigen.

**11.** Vorrichtung nach einem der Ansprüche 2 bis 6, dadurch **gekennzeichnet,** daß die Mittel (270, 271) zum Steuern des Stromerzeugers (240) einen Verstärker (270) mit variablem Verstärkungsgrad aufweisen, der an einen Eingang eines Komparators (274) angeschlossen ist, dessen zweiter Eingang an den Eingang der Last (Log) angeschlossen ist und dessen Ausgang an den Stromerzenger (240) angeschlossen ist.

**12.** Vorrichtung nach Anspruch 11, dadurch **gekennzeichnet,** daß der Verstärker (270) mit variablem Verstärkungsgrad ein Schwächungsglied (272) aufweist, das aus einem Widerstandsnetzwerk gebildet ist, das durch die Ausgabe des digitalen Filtermittels fremdgesteuert wird.

**13.** Vorrichtung nach Anspruch 12, dadurch **gekennzeichnet,** daß der Verstärker (270) mit variablem Verstärkungsgrad eine erste Verstärkerstufe (271), ein aus einem Widerstandsnetzwerk gebildetes Schwächungsglied (272) und eine zweite Verstärkerstufe (273) aufweist.

**14.** Vorrichtung nach einem der Ansprüche 1 oder 2, dadurch **gekennzeichnet,** daß der Digital-Impedanz-Wandler (200) einen Digital-Analog-Wandler (280) und einen Analog-Impedanz-Wandler (285) aufweist.

**15.** Vorrichtung nach einem der Ansprüche 1 oder 2, dadurch **gekennzeichnet,** daß das Mittel (292) zum Steuern der Stromquelle digitale Rechenmittel aufweist.

**16.** Vorrichtung nach Anspruch 15, dadurch **gekennzeichnet,** daß die digitalen Rechenmittel (292) einen Eingang haben, der mit Hilfe eines Analog-Digital-Wandlers (294) an den Eingang der Last angeschlossen ist, und daß ihr Ausgang mit Hilfe eines Digital-Analog-Wandlers (295) an den Steuereingang der Stromquelle (290) angeschlossen ist.

**17.** Vorrichtung nach einem der Ansprüche 1 oder 2, dadurch **gekennzeichnet,** daß das Mittel (292) zum Steuern der Stromquelle analoge Rechenmittel aufweist.

18. Vorrichtung nach Anspruch 17, dadurch **gekennzeichnet,** daß das Steuermittel (292) eine analoge Information empfängt, die den Ausgangswiderstand eines Widerstandsnetzwerks (130) darstellt, das von dem digitalen Filtermittel (100) gesteuert wird.

19. Vorrichtung nach einem der Ansprüche 2 bis 18, dadurch **gekennzeichnet,** daß die Mittel (310) zum Messen der Klemmenspannung der Last (B1, B2) eine Widerstandsteilerbrücke (R312; R314) aufweisen.

20. Vorrichtung nach einem der Ansprüche 2 bis 19, dadurch **gekennzeichnet,** daß die als Stromquelle ausgebildete Endstufe (320) einen in Reihe mit dem Sensor (Ca) verbundenen Transistor (T327) aufweist.

21. Vorrichtung nach einem der Ansprüche 2 bis 20, dadurch **gekennzeichnet,** daß die als Stromquelle ausgebildete Endstufe (320) zwei parallel geschaltete Zweige (321, 325) aufweist, von denen jede einen Transistor (T323, T327) aufweist.

22. Vorrichtung nach Anspruch 21, dadurch **gekennzeichnet,** daß ein erster Zweig (321) einen in Reihe mit einem Transistor (T323) geschalteten Widerstand (R322) und der zweite Zweig (325) einen in Reihe mit einem Transistor (T327) und dem Sensor (Ca) geschalteten Widerstand (R326) aufweist.

23. Vorrichtung nach einem der Ansprüche 21 oder 22, dadurch **gekennzeichnet,** daß der eine der Transistoren (T323) von einem Operationsverstärker (360) fremdgesteuert wird, der an seinen Eingängen jeweils das Signal der an den Klemmen der Last gemessenen Spannung und das Ausgangssignal des Filters empfängt.

24. Vorrichtung nach Anspruch 23, dadurch **gekennzeichnet,** daß der zweite Transistor (T327) von einem Operationsverstärker (370) fremdgesteuert wird, der an seinen Eingängen jeweils das an einem Zwischenpunkt der beiden Zweige (321, 325) vorhandene Potential empfängt.

25. Vorrichtung nach einem der Ansprüche 1 bis 24, dadurch **gekennzeichnet,** daß die digitalen Filtermittel (100) eine Komparatorstufe (110), die an einem ersten ihrer Eingänge das Ausgangssignal des Sensors (Ca) empfängt, einen Vorwärts-Rückwärts-Zähler (120), der an einem Eingang ein Taktsignal mit konstanter Frequenz und an seinem Eingang zum Steuern des Vorwärts-Rückwärts-Zählens die Ausgabe der Komparatorstufe (110) empfängt, und ein Widerstandsnetzwerk (130) aufweisen, das zwischen den Ausgang des Vorwärts-Rückwärts-Zählers (120) und den zweiten Eingang der Komparatorstufe (110) geschaltet ist.

26. Vorrichtung nach einem der Ansprüche 12, 13 oder 25, dadurch **gekennzeichnet,** daß das Widerstandsnetzwerk (130) eine Teilerbrücke mit mehreren Widerständen gleichen Wertes R aufweist, die mit Hilfe eines Widerstands des Wertes 2R zwischen die Masse und den Ausgang des Netzwerks in Reihe geschaltet sind, wobei außerdem jeder Verbindungspunkt von zwei benachbarten Widerständen der Teilerbrücke und auch der Ausgangspunkt der Teilerbrücke mit Hilfe eines Widerstands des Wertes 2R an einen Umschalter (A0 bis An) angeschlossen ist, wobei jeder Umsehalter jeweils durch eine Ausgabe des digitalen Filtermittels (100) gesteuert wird, so daß jeder Umschalter wechselweise den entsprechenden Widerstand (2R) mit entweder der Masse oder einer Referenzspannung verbindet.

27. Vorrichtung nach einem der Ansprüche 12, 13 oder 25, dadurch **gekennzeichnet,** daß das Widerstandsnetzwerk (130) eine Teilerbrücke mit mehreren Widerständen gleichen Wertes R aufweist, die mit Hilfe eines Widerstands des Wertes 2R zwischen die Masse und eine Referenzspannung in Reihe geschaltet sind, wobei außerdem jeder Verbindungspunkt von zwei benachbarten Widerständen der Teilerbrücke und auch der die Referenzspannung empfangende Endpunkt der Teilerbrücke mit Hilfe eines Widerstands des Wertes 2R an einen Umschalter angeschlossen ist, wobei die Umschalter (A0 bis An) durch eine zugeordnete Ausgabe des digitalen Filtermittels (100) fremdgesteuert werden, so daß jeder Umschalter wechselweise den entsprechenden Widerstand (2R) mit entweder der Masse oder dem Eingang einer Verstärkerstufe (132) verbindet.

28. Vorrichtung nach einem der Ansprüche 3 bis 27, dadurch **gekennzeichnet,** daß das Widerstandsnetzwerk (130, 210) durch die werthohen Bits der Ausgabe des digitalen Filtermittels (100) fremdgesteuert wird.

29. Vorrichtung nach Anspruch 25, dadurch **gekennzeichnet,** daß sie Mittel aufweist, die dafür geeignet sind, beim Unterspannungsetzen die Frequenz des Taktsignales zu verändern.

**30.** Vorrichtung nach Anspruch 29, dadurch **gekennzeichnet,** daß die das Taktsignal erzeugenden Mittel einen Oszillator (142) und einen kaskadenförmig aufgebauten Divisor (140) aufweisen, und daß die Mittel zum Ändern der Frequenz des Taktsignales Mittel aufweisen, die dafür geeignet sind, beim Unterspannungsetzen den Divisor (140) zu hemmen.

**31.** Vorrichtung nach Anspruch 30, dadurch **gekennzeichnet,** daß die Hemmungsmittel (160) an den Ausgang der Komparatorstufe (110) angeschlossen sind, um nach dem Entdecken einer vorbestimmten Anzahl von Nulldurchgängen der Ausgabe der Komparatorstufe (110) ein Hemmen des Divisors (140) zu unterbrechen.

**32.** Vorrichtung nach einem der Ansprüche 1 bis 24, dadurch **gekennzeichnet,** daß die digitalen Filtermittel (100) in Reihe einen Digital-Analog-Wandler (180) und einen Digitalfilter (185) aufweisen.

**33.** Vorrichtung nach einem der Ansprüche 1 bis 24, dadurch **gekennzeichnet,** daß die digitalen Filtermittel (100) eine Komparatorstufe (330), die an einem ersten ihrer Eingänge das Ausgangssignal des Sensors (Ca) empfängt, einen Vorwärts-Rückwärts-Zähler (332), der an einem Eingang (333) ein Taktsignal mit konstanter Frequenz und an seinem Eingang zum Steuern des Vorwärts-Rückwärts-Zählens die Ausgabe der Komparatorstufe (330) empfängt, einen Digitalfilter (335), dessen Eingang mit dem Ausgang des Vorwärts-Rückwärts-Zählers (332) verbunden ist, und einen Analog-Digital-Wandler (344) aufweisen, der zwischen den Ausgang des Digitalfilters (355) und den zweiten Eingang des Komparators (330) geschaltet ist.

**34.** Vorrichtung den Ansprüchen 23 bis 33, dadurch **gekennzeichnet,** daß eine Abtast-Sperr-Schaltung (350) zwischen den Ausgang des Analog-Digital-Wandlers (344) und den einen der Eingänge des Komparators (360) geschaltet ist.

**35.** Vorrichtung nach einem der Ansprüche 1 bis 34, dadurch **gekennzeichnet,** daß die Filtermittel Steuermittel (420) aufweisen, die folgendes umfassen:

- Entdeckungsmittel (422), die dafür geeignet sind, die Begegnungen zwischen dem Eingangssignal und einem aus diesem Eingangssignal herausgefilterten Wert zu entdecken,
- Verzögerungsmittel (424), die bei jeder von den Entdeckungsmitteln (422) nachgewiesenen Begegnung betätigt werden, und
- Mittel (426) zum Sperren des Filters (410), falls vor dem Ende der Verzögerung von den Entdeckungsmitteln (422) keine Begegnung nachgewiesen wird, und zum Entsperren des Filters (410) bei der ersten Begegnung, die von den Entdeckungsmitteln (422) nach dem Sperren des Filters (410) nachgewiesen wird.

**36.** Vorrichtung nach Anspruch 35, dadurch **gekennzeichnet,** daß das digitale Filtermittel (410) ein Filter erster Ordnung ist.

**37.** Vorrichtung nach einem der Ansprüche 35 oder 36, dadurch **gekennzeichnet,** daß das digitale Filtermittel (410) die folgende Form hat:

$$\text{Filter}_n = \text{Filter}_{n-1} + \text{Mniv} \cdot (\text{NIV}_n - \text{Filter}_{n-1}) / P ,$$

worin:

Filter$_n$ für den Wert des gefilterten Signales zum Zeitpunkt n steht,
Filter$_{n-1}$ für den Wert des gefilterten Signales zum Zeitpunkt n-1 steht,
Mniv für einen Multiplikationsfaktor steht,
NIV$_n$ für den Wert der gemessenen Eingabe zum Zeitpunkt n steht, und
P für die Zeitkonstante steht.

**38.** Vorrichtung nach einem der Ansprüche 35 bis 37, dadurch **gekennzeichnet,** daß die Verzögerung in der Größenordnung von 1 bis 2 Sekunden liegt.

**39.** Vorrichtung nach einem der Ansprüche 35 bis 38, dadurch **gekennzeichnet,** daß die Sperrmittel (426) Mittel aufweisen, die dafür geeignet sind, die Zeitkonstante des Filters (410) zu verändern.

**40.** Vorrichtung nach Anspruch 39, dadurch **gekennzeichnet,** daß die Mittel, die dafür geeignet sind, die Zeitkonstante des Filters (410) zu verändern, daran angepaßt sind, einen Multiplikationsfaktor (Mniv) der Filterfunktion zu verändern, um die Zeitkonstante des Filterns während der Sperrperiode zu verlängern.

41. Vorrichtung nach einem der Ansprüche 35 bis 40, dadurch **gekennzeichnet,** daß das Filtermittel Mittel aufweist, die dafür geeignet sind, die Sperrmittel (426) nach der Inbetriebnahme zu hemmen, solange die Entdeckungsmittel (422) eine vorbestimmte Anzahl von Begegnungen zwischen dem Eingangssignal und dem aus diesem Eingangssignal herausgefilterten Wert nicht nachgewiesen haben.

42. Vorrichtung nach einem der Ansprüche 35 bis 41, dadurch **gekennzeichnet,** daß sie ein nichtlineares Mittel aufweist, das dafür geeignet ist, die Nichtlinearität der Gruppe Sensor (Ca)/Last (B1, B2) zu kompensieren.

43. Vorrichtung nach Anspruch 42, dadurch **gekennzeichnet,** daß sie einen nichtlinearen Analog-Digital-Wandler (344) aufweist.

44. Vorrichtung nach Anspruch 42, dadurch **gekennzeichnet,** daß sie Mittel aufweist, die dafür geeignet sind, die Zeitkonstante des Filters als Funktion der nichtlinearen Antwort der Gruppe Sensor (Ca)/Last (B1, B2) zu verändern.

45. Vorrichtung nach Anspruch 44, dadurch **gekennzeichnet,** daß die Mittel zum Verändern der Zeitkonstante des Filters auf einen Multiplikationsfaktor der Filterfunktion einwirken.

46. Vorrichtung nach Anspruch 45, dadurch **gekennzeichnet,** daß der Multiplikationsfaktor Minv der Filterfunktion die folgende Form hat:

$$Minv = 16 \cdot (2 - (NIV_{max} - NIV_n) / NIV_{max}).$$

47. Vorrichtung nach einem der Ansprüche 1 bis 46, dadurch **gekennzeichnet,** daß das digitale Filtermittel (100) und das einen Digital-Impedanz-Wandler bildende Modul (200) in Gestalt eines einzigen integrierten Schaltkreises realisiert sind.

48. Vorrichtung nach einem der Ansprüche 1 bis 47, dadurch **gekennzeichnet,** daß sie auf dem Sensor (Ca) vorgesehen ist.

49. Vorrichtung nach einem der Ansprüche 1 bis 47, dadurch **gekennzeichnet,** daß sie auf der Last (Log) vorgesehen ist.

50. Vorrichtung nach einem der Ansprüche 1 bis 49, dadurch **gekennzeichnet,** daß der Sensor (Ca) ein Widerstandssensor ist, vor allem zum Messen eines Flüssigkeitspegels.

51. Vorrichtung nach einem der Ansprüche 1 bis 50, dadurch **gekennzeichnet,** daß der Sensor (Ca) ein Sensor nach Art eines Potentiometers ist, der von einer geregelten Spannung versorgt wird und dessen Ausgangsinformation von dem Schleifer des Potentiometers abgegriffen wird.

52. Vorrichtung nach einem der Ansprüche 1 bis 50, dadurch **gekennzeichnet,** daß der Sensor (Ca) ein Sensor vom rheostatischen Typ ist, der von einer Stromquelle versorgt wird und dessen Ausgangsinformation von den Klemmen des so gebildeten Regelwiderstands abgegriffen wird.

53. Vorrichtung nach einem der Ansprüche 1 bis 52, dadurch **gekennzeichnet,** daß der in dem Sensor (Ca) zirkulierende Strom schwächer als der in der Last (Log) zirkulierende Strom ist.

54. Vorrichtung nach einem der Ansprüche 1 bis 52, dadurch **gekennzeichnet,** daß der Sensor (Ca) mit Wechselstrom versorgt wird und daß eine Gleichrichterschaltung zwischen dem Sensorausgang und dem Eingang des digitalen Filtermittels (100) vorgesehen ist.

55. Vorrichtung nach einem der Ansprüche 1 bis 54, dadurch **gekennzeichnet,** daß die Last (Log) durch ein Anzeigegerät, vorzugsweise ein logometrisches Anzeigegerät gebildet wird.

56. Vorrichtung nach einem der Ansprüche 1 bis 55, dadurch **gekennzeichnet,** daß sie umfaßt:

- einen Komparator (330), der an einem ersten Eingang die Klemmenspannung des Sensors (Ca) empfängt,
- einen Vorwärts-Rückwärts-Zähler (332), dessen Eingang für das Vorwärts-Rückwärts-Zählen mit dem Ausgang des Komparators (330) verbunden ist,
- einen Digitalfilter (335), dessen Eingang mit dem Ausgang des Vorwärts-Rückwärts-Zählers (332) verbunden ist,
- einen Multiplexer (340), der an seinen Eingängen jeweils die Ausgabe des Vorwärts-Rückwärts-Zählers (332) und die Ausgabe des Digitalfilters (335) empfängt,
- einen Digital-Analog-Wandler (344), dessen Eingang mit dem Ausgang des Multiplexers (340) verbunden ist und dessen Ausgang mit dem zweiten Eingang des Vorwärts-Rückwärts-Zählers (332) verbunden ist,
- eine Abtast-Sperr-Schaltung (350), deren Eingang mit dem Ausgang des Digital-Analog-Wandlers (344) verbunden ist, und
- eine Steuerschaltung (360, 321, 325), die eine Stromquelle (T323, T327) am Ausgang der Vorrichtung auf der Grundlage der an den Klemmen der Last gemessenen Spannung und des von der Abtast-Sperr-Schaltung (350) ausgegebenen Signals fremdsteuert.

57. Vorrichtung nach einem der Ansprüche 1 bis 56, dadurch **gekennzeichnet,** daß sie eine Stromquelle (T327, 104) aufweist, die den Sensor (Ca) speist, wobei die Stromquelle (T327, 104) derart gesteuert wird, daß sie einen Strom (Ij) abgibt, der zu dem an die Last angelegten Ausgangsstrom (IL) proportional ist.

58. Vorrichtung nach einem der Ansprüche 1 bis 57, dadurch **gekennzeichnet,** daß sie umfaßt:

- einen Analog-Digital-Wandler (190), dessen Eingang mit dem Ausgang des Sensors (Ca) verbunden ist,
- einen digitalen Filter (100), dessen Eingang mit dem Ausgang des Analog-Digital-Wandlers (190) verbunden ist,
- einen Digital-Analog-Wandler (192), dessen Eingang mit dem Ausgang des digitalen Filters (100) verbunden ist,
- ein Schwächungsglied (197), dessen Eingang mit der Last verbunden ist, und
- eine Ausgangsstromquelle (T194), die durch die Differenz zwischen dem aus dem Digital-Analog-Wandler (192) stammenden Signal und dem aus dem Schwächungsglied (197) stammenden Signal fremdgesteuert wird.

59. Anwendung der Schaltung gemäß einem der Ansprüche 1 bis 58 auf die Verarbeitung des Ausgangssignales eines Widerstandssensors bei Kraftfahrzeugen.

FIG.1
Etat de la
Technique

Ca

+ Bat

B₁

Ioq

B₂

FIG.2
Etat de la
Technique

AMORTISSEMENT
ELECTRIQUE

Ca

R1

C₁

PWM

PB

Cae

+

B₁

Ioq

B₂

## FIG_3

MOYENS
FILTRAGE
NUMERIQUE
100

CONVERTISSEUR
NUMERIQUE
IMPEDANCE
200

Ca

+
B1
log
B2

## FIG_7

V Ref

130

2R
Vs (110)

An
R
2R
A2
R
2R
A1
R
2R
A0
2R

FIG. 4

100

150

160

140

142

RES. OSC

CAPA. OSC

106

VCC

R. réglage

104

152

Circuit
d'initialisation
compteur

POR

DIVISEUR
par 1024

100µs

OSCILLATEUR
R / C

112

RESET

110

124

122

Horloge 100ms

R 114

A
B

+
−

Q

CLK

UP/DOWN

Compteur/
Décompteur
12 bits

120

SEUIL ALERTE

170

102

Comparateur

C 116

CND

126

B
A

−
+

Q

ALERTE

172

Comparateur d'alerte
mini essence

Reseau R/2R    10 bits

130

Résistance reconstituée
3/280 ohms

213

Convertisseur
1/1000

d'impédance

VCC

D 260

Résistance
3k/280k

Sortie avec
limitation
de courant

SORTIE LOGO

Reseau    9bits

214

Diodes de
protection

D 262

210

GND

200

220

224

EP 0 612 982 B2

FIG.5

EP 0 612 982 B2

FIG_6

300

PLUS.AC

r. BALAST    Vcc

ZENER

R 144    C 146
R. OSC    C.OSC

Oscillateur RC

ALIM

VCC

R 174

R 176

PLUS AC
Voyant alerte mini 177

179

T2 178

Résistance de réglage

VCC

108

106

REGLAGE.1    Amortisseur de jauge numérique à sortie résistive

seuil alerte

Sortie alerte

Capteur de niveau d'essence

JAUGE

JAUGE
Ca
GND

102

Sortie logomètre

PLUS. AC

B1

B2

Log

GND

CI

FIG.8

FIG.9

FIG_10

FIG_13

FIG.11

EP 0 612 982 B2

100

MOYENS DE
FILTRAGE NUMERIQUE

CONVERTISSEUR A / N
+
Filtre Numérique ou
Moyens 110, 120, 130

R capteur

Ca

CALCUL

292

I = U / R

Tension
Logo

CONVERTISSEUR
A / N

294

CONVERTISSEUR
N / A

Vers Logo

200

295

290

FIG_12

FIG.14

FIG.15

EP 0 612 982 B2

## FIG.16

## FIG.17